# EUROPEAN PATENT SPECIFICATION

(11) **EP 0 550 992 B1**
(45) Date of publication and mention of the grant of the patent: **12.03.1997**
(21) Application number: 92311576.0
(22) Date of filing: 18.12.1992
(51) Int. Cl.: B63C 1/02, B63C 9/06, B63C 7/00

(54) **Vessel hull construction and related methods**
Schiffsrumpfkonstruktion und darauf bezogenes Verfahren
Construction de coques de bateaux et méthodes s'y rapportant

(30) Priority: 09.01.1992 US 818588
(43) Date of publication of application: 14.07.1993
(73) Proprietor: METRO MACHINE CORPORATION, Norfolk, Virginia 23501 (US); MARINEX INTERNATIONAL INC., Hoboken, New Jersey 07030 (US)
(72) Inventor: Goldbach, Richard A., Norfolk, Virginia 23517 (US); Salzer, Richard, Sugar Land, Texas 77478 (US); McConnell, Frank E., Norfolk, Virginia 23517 (US)
(74) Representative: Laight, Martin Harvey

(56) References cited:
- DE-C- 836 610
- FR-A- 2 189 254
- GB-A- 782 858
- GB-A- 1 218 272
- NL-A- 8 500 520
- US-A- 3 765 359

## Description

The present invention relates to a vessel hull structure and methods relating to manoeuvring hull components and to fabricating vessel hulls.

In the co-pending European patent applications, No. 91304788.2, No. 91331834.5, and No. 92300233.1, there are disclosed apparatus and methods for constructing a novel double-hulled product, which as panels, modules and midbodies, are useful in the construction of vessels, in particular, bulk carriers for crude oil and other products.

The present invention relates to improvements in the method and products disclosed in the above-identified earlier applications.

In general, the invention relates to providing a double-hulled vessel which, compared with conventional constructions, is made with a reduced number of different pieces, a reduced complexity, which can be fabricated using a higher degree of automation, which, in many applications is more durable and/or needs less maintenance, and need not cost the 20 percent additional that a conventional double hull costs compared with a conventional single hull. In fact, in some instances, a double hull produced in accordance with the invention can successfully compete in price with a conventional single hull for the same duty and carrying capacity.

Compared with the apparatus, methods and products disclosed in the earlier European patent application No.91304788.2, the above-mentioned earlier applications Nos. 92300233.1 and 91311834.5 teach a modified method for constructing and coating the painted subassemblies, for assembling the painted subassemblies into modules of the hull, for launching the modules into the water on their sides, for outfitting the modules while in the water by installing fabricated piping and auxiliary structure through the open end of each module, for retrieving each outfitted module from the water while simultaneously turning each module into its final upright position and for joining each module to a respective adjacent module.

As a result of a 1970's convention entered into by the major maritime shipping nations (the "MARPOL Convention"), bulk petroleum carrier ships must have separate tanks for ballast and cargo oil. Ships thereupon necessarily became larger in overall size for carrying the same amount of cargo. Fewer bulk petroleum carrier ships were built to this requirement than had been built to serve the same market within a comparable prior period. Also, new and aggressively expanding factors in the bulk cargo vessel field sought to capture market share by cutting out what they deemed excess weight in the construction of hulls for such vessels. Part of the reduction was accomplished by using high tensile strength steel, but some was accomplished by reducing the safety margin in the thickness, spacing and redundancy of constructional elements conventionally provided to accommodate loss of strength due to corrosion occurring during the expected life of the vessel. At the same time, carrying only ballast in certain tanks of the vessel, due to requirements of the MARPOL Convention, caused accelerated corrosion. The need for better coatings was not recognized soon enough; therefore, it is now believed that many bulk cargo-carrying ships built within the last 15 years will have unpredictably short useful lives.

A conventional double-hull tanker lets ballast be carried between hulls. Such a ship does not need to be any larger, overall, than a conventional single-hull, segregated-ballast tanker.

It is believed that in the period from 1990 to 2010, the number of tankers requiring replacement or re-midbodying, assuming modest expansion of world fleet requirements, an average vessel life of 25 years, and an average vessel size of 85,000 DWT, is about 180 to 200 tankers per year.

In GB-A-782858 (Braithwaite) there is disclosed a pontoon for pitching under-water foundation members. The pontoon has a permanently floating portion in association with a platform portion which is adapted to be tilted in order to pitch the foundation member from a horizontal position to an upright position. The member to be pitched is supported by the pontoon with the member extending on both sides of a hinge between the two portions of the pontoon. Tilting is achieved by flooding one or more ballast chambers of the pontoon.

According to the present invention in one aspect there is provided a method of erecting an object from an upended to an upright orientation, the method including disposing the object on a support which is mounted for pivotal movement about a substantially horizontal axis between a substantially horizontal first position, and a substantially vertical second position, and pumping water out of ballast tanks of the floating support so as to cause said upended object on said support to rotate about said axis, with said support, until said support has said second, generally vertical position and said object is upright;
characterised in that said object is a vessel hull module for a double-walled tanker midbody, said module including inner and outer hulls interconnected by longitudinal plates so as to define double-hull left, right and bottom walls each comprising a respective series of longitudinal cells, a deck bridging between said left and right walls, and transverse bulkhead means closing corresponding one ends of said cells and a corresponding one end of the space defined peripherally inwardly of said left, right and bottom walls and said deck, the opposite ends of said space being open;
said method comprising;
(a) providing a floating drydock having at least one section which is capable of being elevated and depressed in a body of water by pumping out and flooding said ballast tanks;
(b) providing on said floating drydock a trunnion assembly including said support and trunnions journalling the support for pivotal movement about said substantially horizontal axis between said substantially horizontal first position, and said substantially vertical second position;
(c) disposing said floating drydock in a body of water in a floating condition and disposing in the same body of water, adjacent said drydock, said module in an upended condition, floating with its closed end down;
(d) depressing said drydock section by flooding said ballast tanks thereof and floating said upended module onto said support, with said support in said first, generally horizontal position, so that said upended module is supported on said support with said bottom wall and said deck of said upended module disposed on opposite sides of an imaginary vertical plane containing said axis of said trunnion assembly;
(e) filling a heavier-than-air fluid medium into at least some of said cells and pumping water out of the ballast tanks of said drydock section, so as to gradually elevate said drydock section and thereby cause said upended module on said support to rotate about said axis, with said support, until said support has said second, generally vertical position and said module is upright and rests on a support surface which is located adjacent to said support of said trunnion assembly.

Preferably step (e) comprises filling a heavier-than-air fluid medium into at least some of said cells of said bottom wall. In some arrangements said heavier-than-air fluid medium is water. Said body of water may be a body of fresh water and said heavier-than-air fluid medium may be seawater.

The support surface may be located on the said floating drydock section. Conveniently step (c) includes assembling said module on said floating drydock section from a plurality of hull and deck subassemblies and transverse bulkhead elements, while said floating drydock section is elevated in said body of water.

The method may further include: as part of step (c), depressing said elevated floating drydock section and floating off thereof said upended module into said body of water; and installing additional structural elements in said upended module while said upended module is floating in said body of water. Furthermore, the method may include, while said upended module is floating in said body of water, likewise successively assembling a plurality of like modules on said floating drydock section and floating each off into said body of water as a respective upended module.

There is also provided in accordance with the present invention a method of fabricating a major component of a double-hulled tanker, comprising: erecting from an upended to an upright orientation a vessel hull module for a double walled tanker midbody, by a method as set out hereinbefore, steps (d) and (e) being successively conducted on each of said modules; (f) shifting along said support surface each upright module most recently subjected to step (e) along its own longitudinal axis away from said trunnion assembly before each respectively successive conduct of step (e); and (g) serially connecting all of said upright modules to one another end-to-end, thereby providing a tanker longitudinal midbody component.

In one arrangement the method may further comprise: (h) providing a second said floating drydock section adjacent the first-described said floating drydock section; and as step (f) is conducted, shifting the respective upright module most recently subjected to step (e) from said support on said first-described floating drydock section, onto said second floating drydock section; step (g) being conducted on said second floating drydock section.

It may be arranged that, at each instance while conducting step (g) that a respectively more recently assembled said upright module is connected end-to-end to a respectively previously assembled said upright module, the respective more recently assembled said upright module is supported on said first-described floating drydock section and the respective previously assembled said upright module is supported on said second floating drydock section and the respective module ends to be connected to one another are disposed effectively between said first-described and second floating drydock modules; and, as part of said each instance, said first-described and second floating drydock modules are positionally adjusted relative to one another on said body of water for aligning the respective said module ends to be connected.

In some arrangements, the method may further comprise:
(i) after step (h) has been completed, providing on said support surface of said first-described floating drydock section one of a tanker bow section and a tanker stern section having an end effectively disposed between said first-described and said second floating drydock sections in juxtaposition with an end of said tanker longitudinal midbody component;
(j) connecting said end of said tanker longitudinal midbody to said end of said tanker bow section and stern section, to thereby provide a respective bow- or stern-ended tanker midbody component; and
(k) depressing said first-described and second floating drydock sections and floating said respective bow- or stern-ended tanker midbody component therefrom onto said body of water.

In other arrangements, there may be provided in accordance with the invention a method of fabricating a double-hulled tanker, comprising: fabricating a first tanker longitudinal midbody component by a method as set out hereinbefore; and
(i) after step (h) has been completed, providing on said support of said first-described floating drydock section a tanker bow section having an end effectively disposed between said first-described and said second floating drydock sections in juxtaposition with an end of said tanker longitudinal midbody component;
(j) connecting said end of said tanker longitudinal midbody to said end of said tanker bow section, to thereby provide a bow- ended tanker midbody component; and
(k) depressing said first-described and second floating drydock sections and floating said bow-ended tanker midbody component therefrom onto said body of water;
(l) repeating the series of steps (a) - (h) to provide a second tanker longitudinal midbody component;
(m) after step (l) has been completed, providing on said support of said first-described floating drydock section a tanker stern section having an end effectively disposed between said first-described and said second floating drydock sections in juxtaposition with an end of said second tanker longitudinal midbody component;
(n) connecting said end of said second tanker longitudinal midbody to said end of said tanker stern section, to thereby provide a respective stern-ended tanker midbody component;
(o) depressing said first-described and second floating drydock sections and floating said stern-ended tanker midbody component therefrom onto said body of water;
(p) maneuvering said bow-ended and stern-ended tanker midbody components and said first-described and second floating drydock sections so that one of said components is supported by said first-described floating drydock section and the other of said components is supported by said second floating drydock sections, with respective free ends of each juxtaposed effectively between said first-described and second floating drydock sections and said components in longitudinal alignment;
(q) joining said free ends together to provide a double-hulled tanker; and
(r) depressing said first-described and second floating drydock sections and floating said double-hulled tanker therefrom onto said body of water.

This method may further include:
(s) prior to conducting steps (i) and (m), acquiring a combined bow section end-connected to stern section, longitudinal midbodiless vessel and providing said vessel on said body of water adjacent said first-described and second floating drydock sections;
(t) depressing said first-described and second floating drydock sections, floating said vessel thereover and elevating said first-described and second floating drydock sections so that a joint between said bow and stern sections is effectively located between said first-described and second floating drydock sections, and said vessel is cooperatively supported by said first-described and second floating drydock sections; and
(u) disconnecting said bow and stern sections from one another at said joint.

The method may further comprise: (v) subsequent to conducting step (u) and prior to conducting steps (i) and (m), depressing said first-described and said second floating drydock sections, and floating said bow sections respectively therefrom onto said body of water.

Finally, there may also be provided in accordance with the invention a bow ended tanker midbody component, a stern-ended tanker midbody component, a tanker longitudinal midbody component, and a double-hulled tanker, all produced by the method set out hereinbefore, utilising appropriate steps of the methods. There may also be provided an upright vessel hull module when produced by the method according to the invention.

Yet further preferred, and/or optional features will now be set out in accordance with some aspects of the invention. It is particularly to be appreciated that the following statements relate only to preferred or optional or exemplary features, and do not set out essential features of the invention.

An improved curved-plate, double-hull tanker construction is provided, having reduced or eliminated transverse reinforcing structure in its midbody, except for bulkheads. The hull, though double, can compare in weight to conventional single hulls, despite being entirely made of mild steel plate. It is made of significantly fewer pieces, with a reduction in welding footage. More of the steel is used in the form of plate, rather than more expensive shapes. Improved productivity is possible, resulting from standardization of parts, less scrap, greater use of jigs and fixtures, automated welding, blast-cleaning and painting, so that not so much staging is needed, the work environment can be safer, and the product can be produced at a lower unit labour cost. Preferably, cathodic epoxy painting is used for durability and reduction in problems due to blast cleaning, solvent evaporation and generation of refuse. Extending the double-hull structure from the bottom and sides of the hull to the main deck can provide space for fuel oil to be located safely away from the skin of the ship, rather than in possibly vulnerable deep tanks at the stern. The constructional technique is believed to be applicable to vessel hulls in the 70,000 DWT to 300,000 DWT range. The vessel hull midbody module subassemblies may be assembled into modules, hull midbodies and vessels using the method and apparatus disclosed in co-pending applications. However, the prior methods for turning the modules from an upended to an upright condition, for assembling the modules to one another and for connecting major components to provide a tanker are improved by use of a set of two floating drydock sections, one of which has a tiltable platform-bearing trunnion assembly.

Embodiments of the invention will now be described by way of example with reference to the accompanying drawings in which:-
Figure 1 is a fragmentary schematic top plan view of a facility for fabricating steel plate into subassemblies of modules for double-hull, bulk-carrier (e.g., VLCC) vessel hull midbodies, according to principles of the present invention;
Figure 2 is a fragmentary pictorial perspective view of a station on the line shown in Figure 1, for offloading incoming steel plate from rail cars onto the line, or into storage;
Figure 3 is a fragmentary pictorial perspective view of apparatus on the line for flame cutting the steel plate into pieces of required configuration for use in fabricating the double-hull module subassemblies;
Figure 4 is a fragmentary pictorial perspective view of apparatus on the line for fabricating the cut plate into curved (at the left) and stiffened flat (at the center and right) panels that will later be assembled with one another to create the module subassemblies;
Figure 5 is a schematic top plan view of a press assembly for producing the curved plates;
Figure 6 is an end view of the press assembly of Figure 5, showing the assembly about to be closed on a piece of plate stock for press-forming a curved panel therefrom;
Figure 7 is an enlarged scale end view of a portion of the press assembly of Figure 6, showing a retractable means for conveying an edge of the plate stock at the hinge side of the press assembly;
Figure 8 is a front elevation view of a station for surface preparation of flat panel by grinding a succession of clean stripes on a surface so that respective stiffeners can be placed thereon and welded thereto;
Figure 9 is a larger scale fragmentary elevation view of the surface preparation station shown in Figure 8;
Figure 10 is a fragmentary cross-sectional view on line 10-10 of Figure 9;
Figure 11 is a fragmentary pictorial perspective view showing a repair station on the line, for stiffened panels, and a station for surface preparation and coating of both curved and stiffened flat panels;
Figure 12 is a fragmentary pictorial perspective view showing a fixture (shown empty) for receiving the coated curved and stiffened flat panels which are to be joined at respective edges to form a subassembly for a module of a double-hull midbody for a bulk cargo vessel;

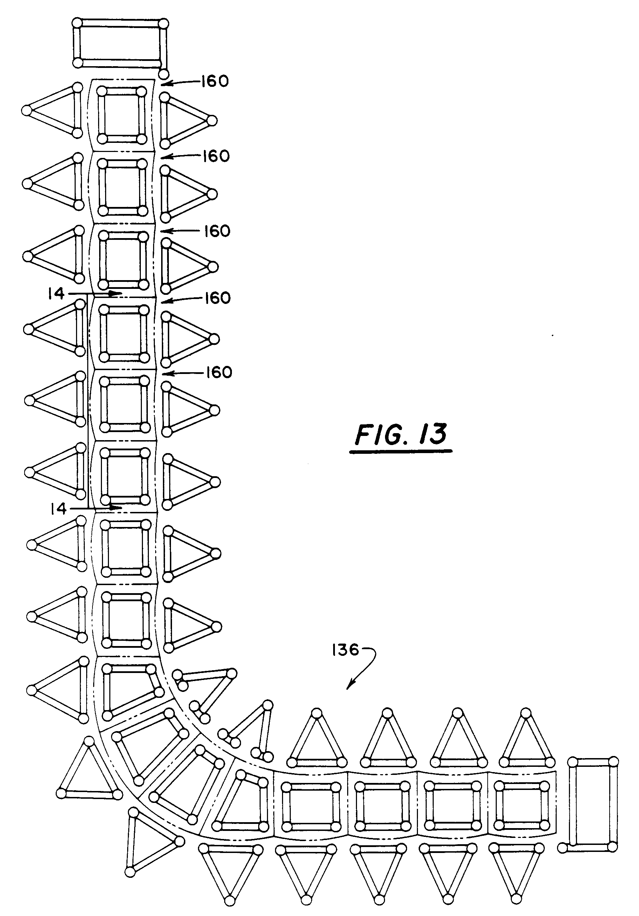

Figure 13 is a diagrammatic top plan view of the fixture of Figure 12;

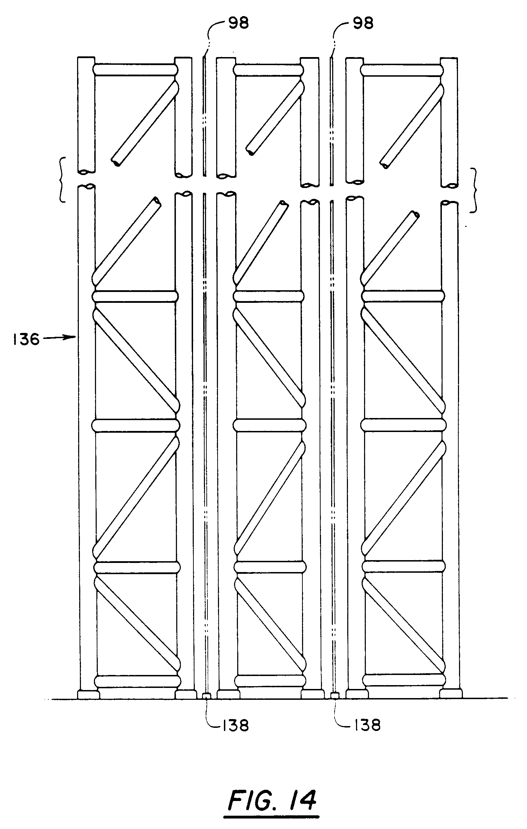

Figure 14 is a fragmentary vertical longitudinal sectional view on line 14-14 of Figure 13, showing two flat panels lowered into place in the fixture of Figure 12;
Figure 15 is a fragmentary pictorial perspective view showing one coated, curved plate being lowered into place in the fixture of Figure 12;
Figure 16 is an enlarged scale fragmentary top plan view of the fixture of Figure 12 after a complete set of flat and curved panels has been lowered into place and devices that will be further explained with reference to Figures 17-22 have been activated for holding the panels in place for welding of edge joints between respective adjoining edges of respective panels;
Figure 17 is a even larger scale fragmentary top plan view of part of the structure shown in Figure 16;
Figure 18 is a horizontal transverse sectional view of one leg element of one tower of the fixture of Figure 12, showing the stationary tube of one manual activating mechanism for a flat panel, and, in elevation, the extensible, latchable member of that manual activating mechanism;
Figure 19 is a fragmentary elevational view, partly in section, one of the manually activating devices used for aligning top edges of respective ones of the curved and flat panels in the fixture of Figure 12;
Figure 20 is a fragmentary top plan view of one of the activating mechanisms used for removing local unfairness of respective ones of the curved and flat panels disposed in the fixture of Figure 12;
Figure 21 is a fragmentary side elevation view of the activating mechanism of Figure 20;
Figure 22 is a top plan view showing how two curved panels and one flat panel are supported in the fixture of Figure 12 where a three-edge T-joint will be welded, in particular showing where pressure is applied by respective fairing aids of Figures 20 and 21, and respective copper backing bars of Figures 23-28;
Figure 23 is an enlarged scale horizontal transverse cross-sectional view of one copper backing bar and an actuator therefor;
Figure 24 is a fragmentary side elevation view of the structure shown in Figure 23;
Figure 25 is a fragmentary pictorial elevational view showing electrogas welding of a T-joint among adjacent edges of two coated curved panels and one coated stiffened flat panel, all as held in the fixture of Figure 12;
Figures 26, 27 and 28 are fragmentary horizontal transverse cross-sectional views of respective portions of subassembly being fabricated in the fixture of Figure 12, showing the plate edges, copper backing bars and copper sliding shoes at sites where three different types of joint configurations are being welded for respective portions of the double-wall vessel hull module subassembly;
Figure 29 is a fragmentary pictorial perspective view showing a module subassembly being removed from the fixture of Figure 12 following completion of welding of the welded joints which interconnect the various curved and flat panels along their respective edges;
Figure 30 is a fragmentary pictorial perspective view showing the fixture of Figure 12 and an adjacent facility used for surface preparation and touch-up coating of the subassembly for repairing damage to the coating earlier provided on the panels caused by the electrogas welding depicted in Figure 25;
Figure 31 is a fragmentary pictorial perspective view, partly broken away for showing the interior of a subassembly cell, illustrating surface preparation and touch-up coating of the interior walls of the cell;
Figure 32 is a fragmentary pictorial perspective view of a tower, with infrared, heating elements continuously arrayed along each vertical corner, the tower being configured to fit inside individual subassembly cells;
Figure 33 is a fragmentary pictorial perspective view depicting the infrared heating tower of Figure 32 being lowered into a subassembly cell;
Figure 34 is a fragmentary pictorial view of the facility used for installation and welding of transverse bulkheads into subassembly cells, the facility being shown with a single transverse bulkhead positioned beneath its matching cell, ready to be raised into position for welding;
Figure 35 is a fragmentary pictorial perspective view of the erecting devices used in the transverse bulkhead installation facility depicted in Figure 34;
Figure 36 is a fragmentary pictorial sectional view, showing the subassembly in place on the subassembly transverse bulkhead installation facility with a transverse bulkhead being welded robotically to the cell walls;
Figure 37 is a fragmentary diagrammatic end view of a completed module at an open end;
Figure 38 is a fragmentary diagrammatic end view of a completed module at an end closed by a transverse bulkhead;
Figure 39 is a fragmentary vertical longitudinal sectional view of the module of Figures 33 and 34, showing a typical shape and position for a transverse bulkhead;
Figure 40 is a fragmentary diagrammatic plan view showing the subassembly fixture, touch-up blast and paint facility, subassembly transverse bulkhead installation facility and the module assembly fixture and launching dock;
Figures 41 and 42 are fragmentary pictorial perspective views showing subassemblies being joined into modules in the module assembly fixture and launching dock;
Figure 43 is a fragmentary pictorial detailed plan view of one of four bottom corner fixtures of the module assembly fixture and launching dock;
Figure 44 is a fragmentary pictorial perspective view of the bottom corner fixture depicted in Figure 43;
Figures 45, 46 and 47 are fragmentary pictorial sectional views of the positioning and indexing devices used with the bottom corner fixture depicted in Figures 43 and 44;
Figure 48 is a fragmentary horizontal cross-sectional view of a rotating kingpost with fixed index used for aligning the tops of curved plate longitudinal subassemblies to each other;
Figure 49 is a fragmentary pictorial sectional view from inside the double hull of two curved plate longitudinal subassemblies, depicting electrogas welding of one of the butt joints joining the subassemblies;
Figure 50 is a fragmentary pictorial perspective view of the electrogas welding fixture and equipment inside a subassembly cell;
Figure 51 is a fragmentary pictorial sectional view of a device for fairing butt joints of adjacent subassemblies;
Figure 52 is a pictorial sectional view of the module ready to be launched on the module assembly fixture and launching dock;
Figure 53 is a fragmentary perspective view of the module being launched from the module assembly fixture and launching dock;
Figure 54 is a fragmentary pictorial perspective view showing a module alongside a shipyard pier being outfitted with a ladder assembly utilizing a crane on the pier;
Figure 55 is a fragmentary plan view of a two-section floating drydock depicting module turning trunions on the outboard section;
Figure 56 is a fragmentary elevation cross section of Figure 55;
Figure 57 is a fragmentary elevation view of the structure of Figure 56 showing the outboard floating drydock section submerged with an afloat module entering the floating drydock section;
Figure 58 is a fragmentary elevation view of the structure of Figure 57 showing the afloat module centered over the module-turning trunions of the outboard drydock section;
Figures 59 through 62 are fragmentary elevation views which schematically show successive steps in drydocking the floating module on the module turning trunions of the floating drydock depicting the module turning to an upright position, as the weight of ballast water in the bottom ballast tanks of the module overcomes the progressively decreasing upward buoyancy of the water supporting the weight of the module;
Figures 63 and 64 are fragmentary elevation views of the module being rolled on tracks from the outboard floating drydock section to the inboard floating drydock section;
Figure 65 is a fragmentary view of a second module which has been turned to an upright position using the method shown in Figures 59 through 62 being further joined to the first module in the position of Figure 64;
Figures 66 through 71 are fragmentary elevation views which schematically show successive steps of joining modules three through eight to form one-half of a double-hull tanker midbody;
Figure 72 is a fragmentary elevation view showing the launching of both sections of the floating drydock, of one-half of the double-hull tanker midbody;
Figures 73 through 76 are fragmentary elevation views which schematically show successive steps of drydocking of a tanker bow/stern combination on a two-section floating drydock, cutting of the joint between the bow and stern and undocking of the tanker bow;
Figures 77 through 80 are fragmentary elevation views which schematically show successive steps of drydocking of one-half of a double-hull tanker midbody on the drydock section vacated by the tanker bow, joining of the tanker stern with that one-half of a double-hull tanker midbody to make a double-hull tanker afterbody, and undocking that double-hull tanker afterbody;
Figures 81 through 84 are fragmentary elevation views which schematically show successive steps of drydocking the tanker bow and the other half of the double-hull tanker midbody using both sections of the floating drydock, joining them to each other to make a double-hull tanker forebody, and undocking that double hull tanker forebody;
Figures 85 through 88 are fragmentary elevation views which schematically show successive steps of drydocking the double-hull tanker afterbody and the double-hull tanker forebody on individual sections of the two-section floating drydock, joining the afterbody and forebody to make a complete double-hull tanker, and undocking the completed double hull tanker.

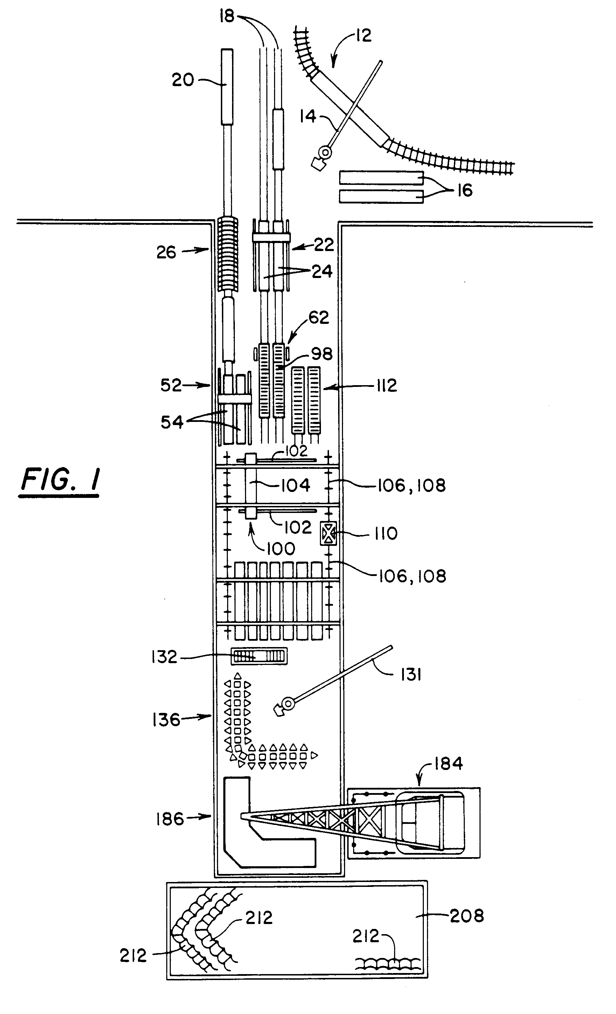

Referring first to Figure 1, a facility for transforming steel sheets into subassemblies for modules for double-hulled longitudinal midbodies of bulk cargo carriers is shown at 10.

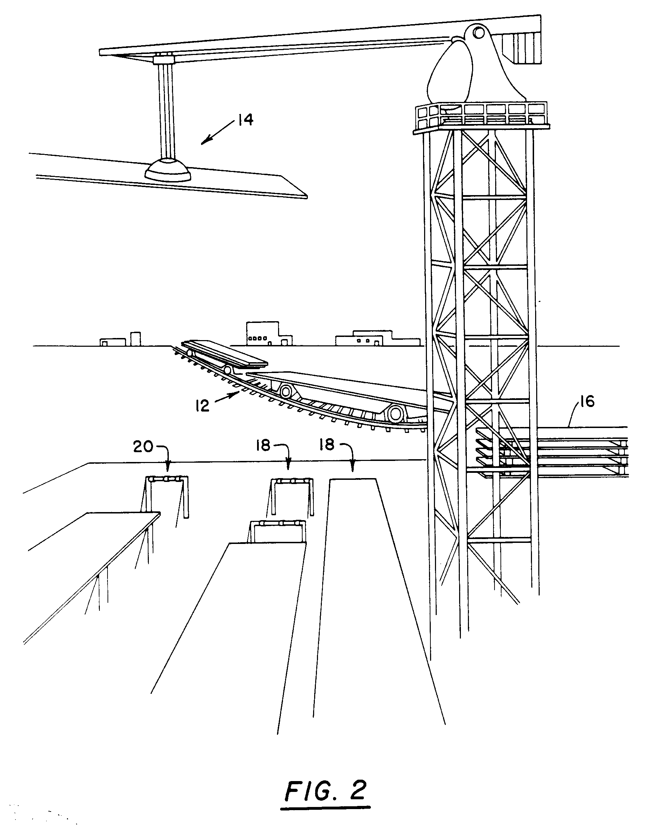

Raw steel plate, typically 0.5 to 1.25 inch thick and approximately 8 feet wide and 50 feet long, procured from a steel mill, is received by rail car 12 (Figures 1 and 2), lifted off by an electromagnet-type grasping device-equipped crane 14 and placed either in storage 16, on one of two conveyor lines 18 feeding flat panel fabrication, on a rail car with an installed conveyor called a collocator car (not shown), or on a conveyor line 20 feeding curved panel fabrication.

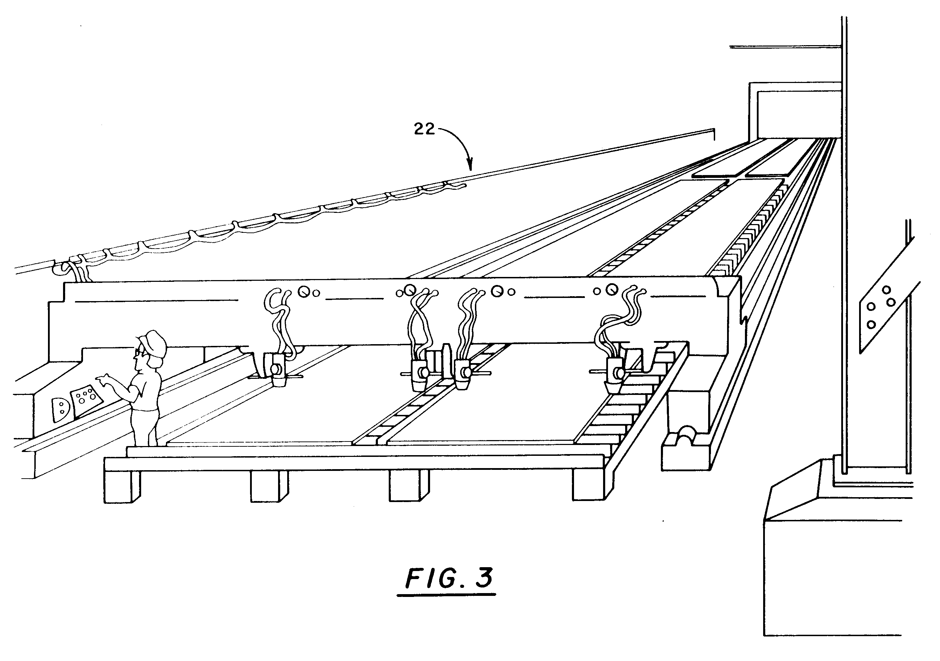

Raw steel plate destined for stiffened flat panels is conveyed on the lines 18 to an automatic burning machine 22 (Figures 1, 3 and 4) where it is cut to final configuration, including any lightening holes (not shown, but see the Cuneo et al. application) to provide flat steel plates 24.

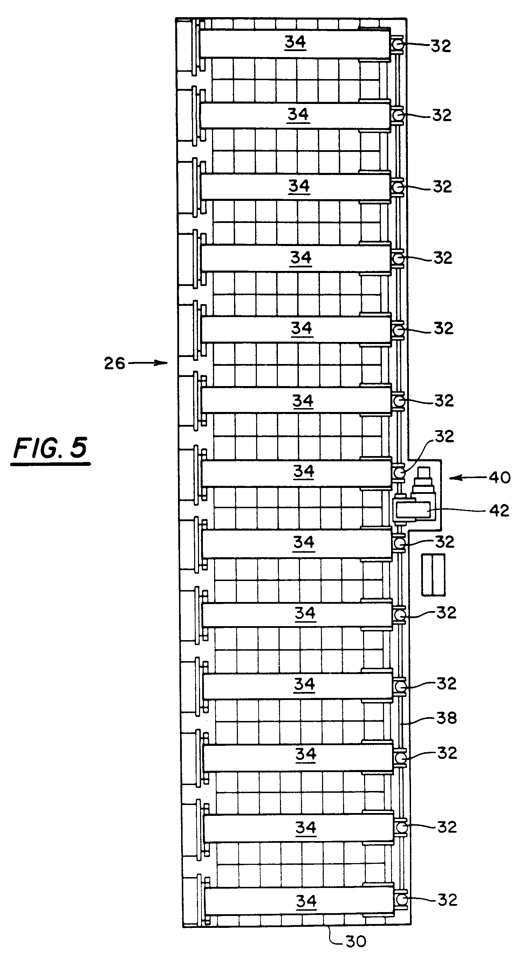

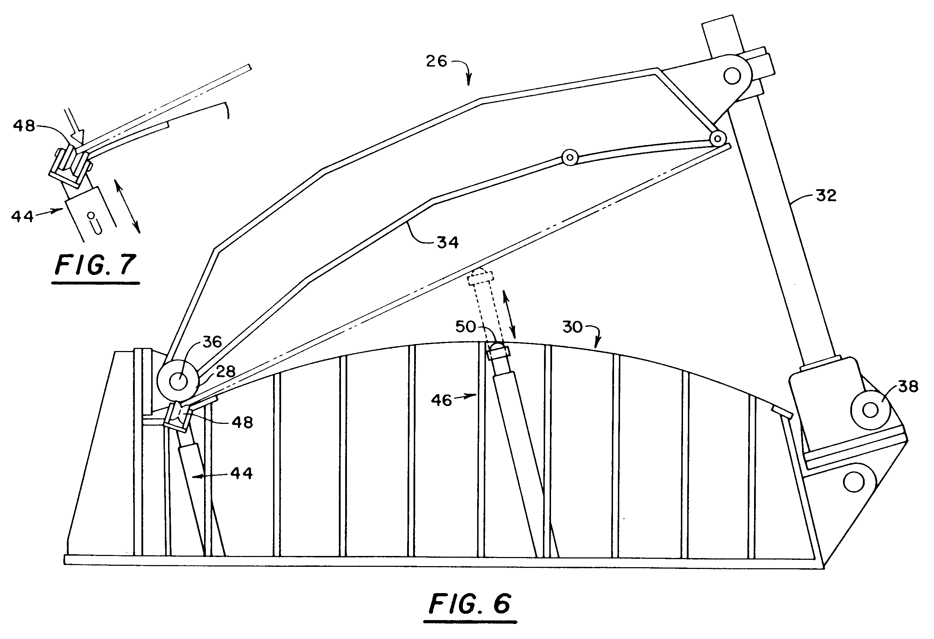

Raw steel plate destined for curved panels is conveyed on the line 20 to the plate forming machine 26 (Figures 1 and 4-6), preferred details of which are shown in Figures 5-7, to produce curved steel plates.

The plate forming machine 26 puts a constant radius curve in a succession of steel plates each approximately 8 feet wide and 50 feet long by holding one longitudinal edge of a raw steel plate in a holder 28 and bending the plate along its transverse axis over an upwardly convex stationary die 30 using a series of hydraulically operated screw jacks 32 attached to a series of downwardly concave forming presses 34. The screw jacks 32 of the preferably forming presses 34, hinged at 36 to the stationary base at an edge of the stationary die 30 are operated simultaneously by a common shaft 38 driven by a hydraulic power plant 40 through a reduction gear 42. The fixed side of the plate is held by a series of cams 28 built into the forming presses. The stationary die 30 is fabricated of steel in an "egg crate" type weldment, so that upper edges of its elements cooperate to define the die. Retractable plate conveying devices 44, 46 are built into the plate bending machine. The devices 44, 46, respectively, have v-grooved and convex rimmed rollers 48, 50 at their plate edge and plate underscale engaging upper ends.

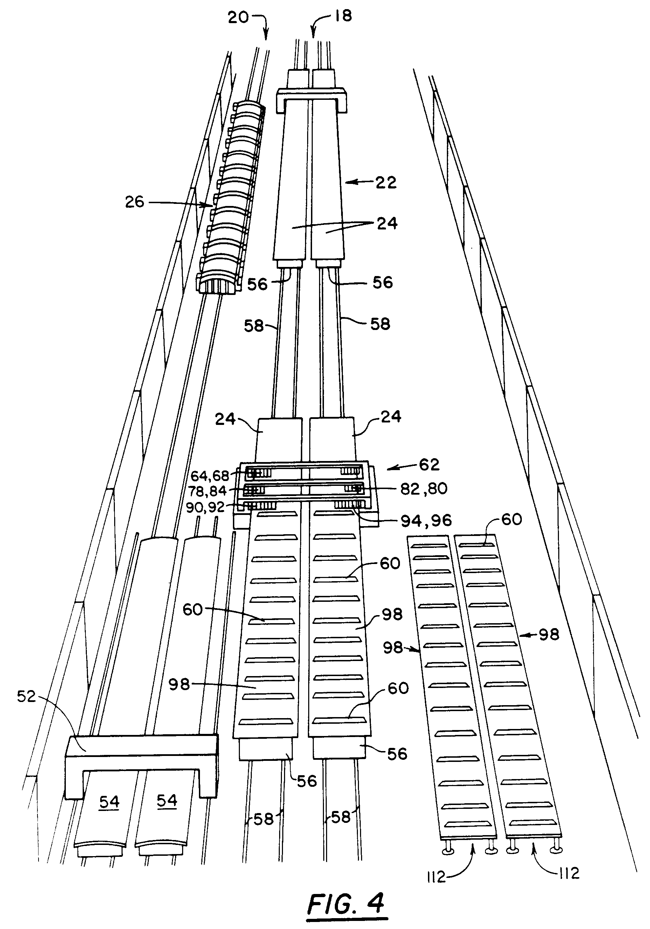

The resulting curved but still not sized steel plates are then conveyed on the line 20 to a flame planer 52 (Figures 1 and 4), similar to automatic burning machine 22 for flat stiffened panels, where they are cut into precise final configuration to provide curved steel plates 54.

Each collocator car 56, comprises a rail car with a roller conveyor on its deck, receives a respective fabricated flat steel plate approximately 8 feet wide and 50 feet long from the automatic burning machine 22 and locates the steel plate in a precise position on the car.

The flat steel plates 24 are transported by respective collocator cars 56 on rails 58 which continue the flat panel lines 18 (Figure 4) where kickplate stiffeners 60 are installed at precise intervals (typically of approximately 32 inches) in a three-stage stiffener installation mechanism 62 (Figures 1 and 4). In order to facilitate this, each collocator car 56, on which a respective flat steel plate 24 is resting, advances by indexing forwards at the same precise intervals using an appropriate gear mechanism.

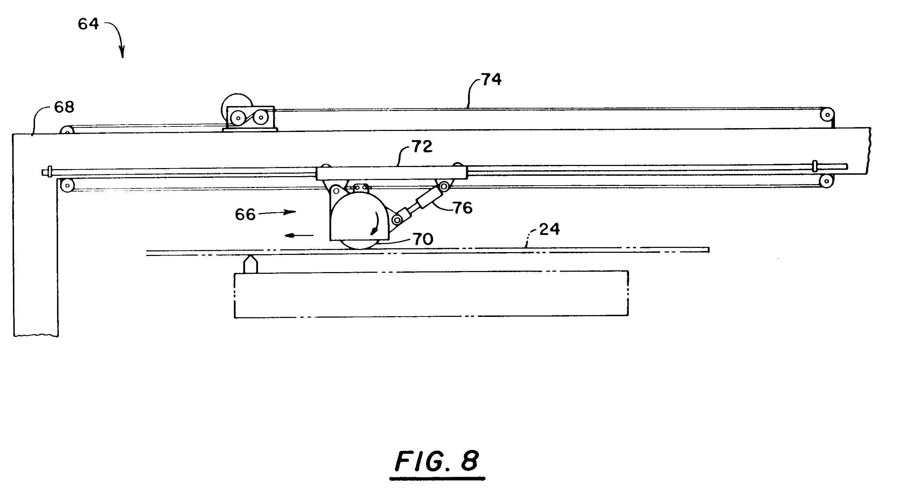

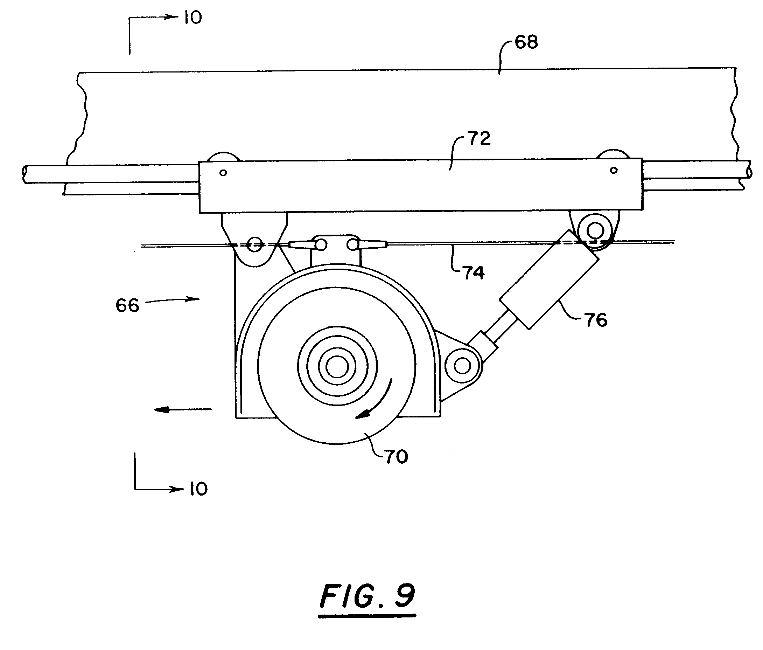

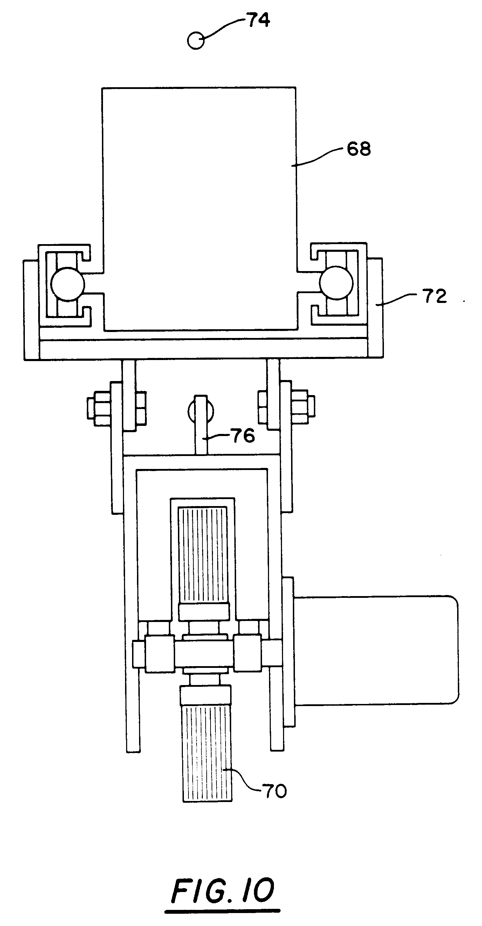

The first stage, 64 (Figures 1, 4 and 8-10), of this stiffener installation mechanism utilizes a grinding machine 66 to remove an approximate 2-inch wide path of mill scale in the way of where each stiffener 60 will be installed. The grinding machine 66 comprises a fixed gantry 68 containing one or more power-rotated grinding wheels 70 mounted on a carriage 72 running transverse to the line of travel of the collocator cars 56, which remove a path of mill scale approximately 2 inches wide in successive precise increments of approximately thirty-two inches as each collocator car 56 is indexed from position to position beneath it. The grinding wheel carriage 72 is electrically driven through a belt or chain mechanism 74 across the gantry. A pneumatic cylinder 76 holds the grinding wheel 70 to the plate with proper force.

The second stage, 78, of the stiffener installation mechanism, receives stiffeners from a kickplate stiffener collator 80, precisely fits and holds each stiffener 60 in its turn to a respective location, which has previously been cleaned of mill scale at 64, and tack welds each stiffener, using a tack welder 82, to the flat plate 24. The second stage 78 includes a fixed gantry 84, located a precise distance of approximately thirty-two inches after the grinder gantry 68, running transverse to the lines of travel of the collocator cars and having for each line a guide 86 into which a succession of identical kickplate steel flat-bar stiffeners 60 is inserted one by one as the collocator cars are indexed from position to position beneath the fixed gantry 84. The fixed gantry 84 is equipped with a mechanical, hydraulic or pneumatic mechanism to lower guides and compress each successive stiffener 60 onto the respective flat plate 24, to enable the stiffener 60 to be tack-welded to the plate using gantry-mounted tack welders 82, and then to raise the guides to permit the collocator cars 56 to index to the next position.

Each kickplate stiffener collator/inserter 80 is a device onto which a bundle of approximately eighteen identical kickplate stiffeners each approximately seven feet long, six inches deep and one-half inch thick is loaded as each fifty-foot long flat plate is processed. Individual kickplates 60 are oriented transverse to the line of flow of the respective collocator car and stacked side by side in the direction of the line of flow of the respective collocator car. The lead kickplate 60 is positioned alongside the opening to the respective guide of the kickplate positioning gantry 84 and inserted into the guide by use of a mechanical, electrical, pneumatic or hydraulic plunger as the respective collocator car 56 and flat plate 24 are indexed into position. Each remaining stack of kickplates 60 is indexed in the same direction as the line of travel of the respective collocator car. Each time each collocator car 56 is indexed thirty-two inches forward, the respective remaining stack of kickplates is indexed one-half inch using mechanical, electrical, hydraulic or pneumatic plungers calibrated mechanically or electronically to the movement of the respective collocator car. Thus, as each flat plate 24 is indexed into the kickplate installation position, a kickplate 60 is always available to be inserted.

Each collocator 80 is structured and functions similar to a transverse feeder on the head end of a magazine of a photographic slide projector.

The third stage 90 of the stiffener installation mechanism final-welds each stiffener 60 in its turn. Alternately, the second and third stages may be combined, with tack welding being eliminated. In the preferred construction, the third stage comprises a fixed gantry 92 containing for each line a carriage-mounted double fillet, flux-core welding machine 94 or substitute located a precise distance of approximately thirty-two inches after the kickplate installation gantry 78 and oriented transverse to the line of flow of the collocator car. The double fillet welding heads of the welding machine 96 are each equipped with a known seam tracker and appropriate positioning slides to compensate for slightly out-of-flatness of the respective plate 24 or minor misalignment of the kickplate stiffeners 60. The welding machines 96 perform finish welding of individual kickplate stiffeners 60 as the flat plates 24 with fitted kickplates 60 are indexed beneath it on the collocator cars 56, thereby providing stiffened flat panels 98.

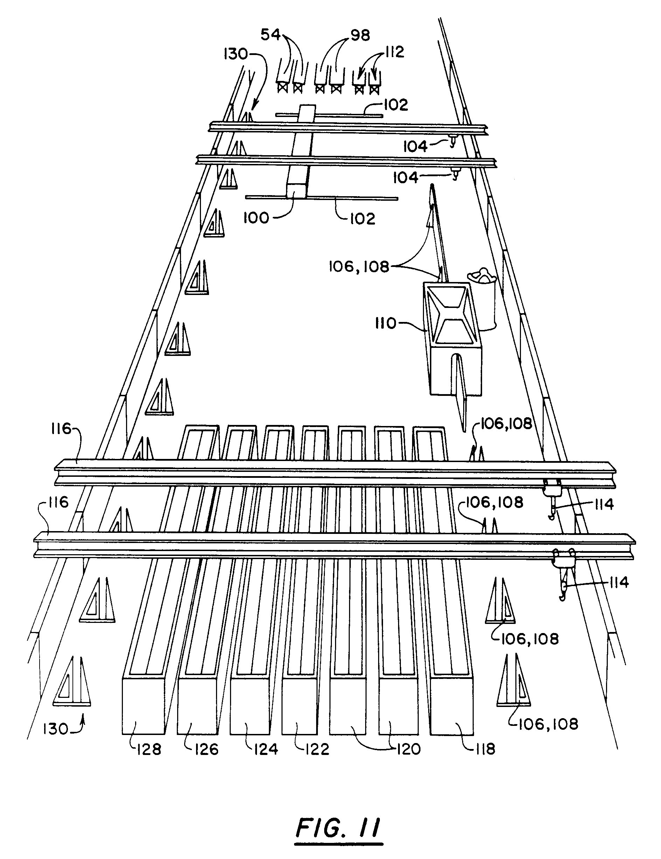

Fabricated curved panels 54 and stiffened flat panels 98 are then conveyed to a transporter car 100, which travels laterally on tracks 102, and then are lifted by hoists 104 from their horizontal positions to a vertical orientation and places it on a chain drive conveyor 106, so that each rests on one of its long edges. The chain drive conveyor 106 transports panels, through guides 108, into and out of a steel-shot abrasive cabinet 110 (Figures 1 and 11) for removal of mill scale, weld slag, weld splatter and other foreign matter.

In the shot-blast cabinet 110, recyclable steel abrasive shot or grit (not shown) is propelled automatically against all surfaces of curved and stiffened flat steel panels 54, 98 being transported through the cabinet by the chain drive conveyor 106 through guides 108 leading into and out of the cabinet. This removes all mill scale, weld slag, weld splatter and other foreign matter from the panels 54, 98.

Fabricated flat panels requiring rework are conveyed by the transporter car 100 to repair stations 112 (Figures 1 and 4) and, upon completion of repairs, are transferred to the abrasive cabinet 110, for surface preparation as described above.

After being shot blasted, curved panels and stiffened flat panels are lifted off the exit conveyor guides 108 (Figures 1 and 11) of the abrasive cabinet 110 using plate clamps 114 hung from the twin monorails 116 running transversely, and are immersed in a rinse tank 118 containing deionized water.

The plate clamps on the twin monorails 116 transport the shot-blasted panels 54, 98 laterally through the five or more positions of the coating process of which the rinse tank 118 is the first.

The rinse tank 118 contains deionized water and is large enough to accommodate one or more of the panels 54, 98 in a vertical position on one of its respective long edges during its rinse, after abrasive cleaning in the shot blast cabinet 110. A wash and pretreatment process is conducted in the rinse tank 118, plus sufficient tanks 120 for two or more subsequent chemical wash and pretreatment stages.

After chemical wash and pretreatment, the next position of the coating line is a cathodic coating tank 122 containing a paint and water solution and large enough to accommodate one or more of the panels for receiving an initial coating, still in a vertical position. The tanks are provided with fenders (not shown) to protect the coating.

The first coating tank preferably contains epoxy paint in water solution, and in it, each panel is cathodically coated, the coating process commercially available from PPG Coatings called Power Cron 640 conductive epoxy primer being presently preferred.

The next position is a curing position 124 with infrared or other surface heaters (not shown) large enough to accommodate one or more of the panels after its initial coating in a vertical position, with fenders (not shown) to protect the coating.

At this curing position 124, the first coating on the curved and flat panels is cured in the infrared-heating cabinet at approximately 350°F.

The next position is a second cathodic coating tank 126 similar to the one at the second position.

After curing at the first curing position 124, the curved and flat panels are immersed in the second coating tank 126 for a second cathodic coat of preferably the same type of epoxy paint, thereafter are removed to a second infrared heating cabinet 128 at a fifth position, for curing, and then stored vertically on their long sides in a storage rack 130 for inspection, with suitable fendering being provided to protect the coating.

The coated panels are then inspected. Inspection criteria include handling damage to the coating, adhesion of the coating to the steel panel, thickness of the coating (normally 2.9 to 3.5 thousandths of an inch (mils.), and curing (hardening).

Curved and stiffened flat panels with unacceptable coatings are conveyed back to the transporter car 100 for reprocessing through the entire surface preparation and coating processes.

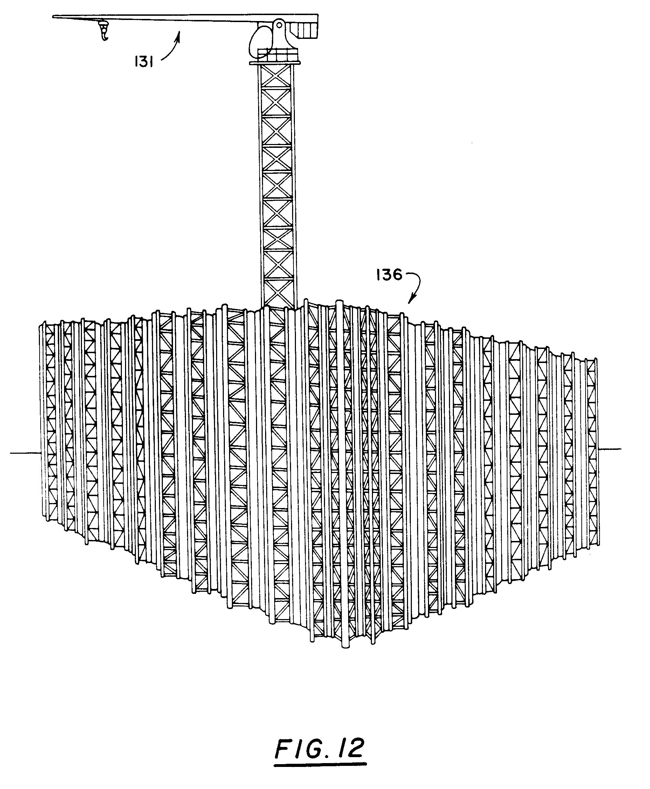

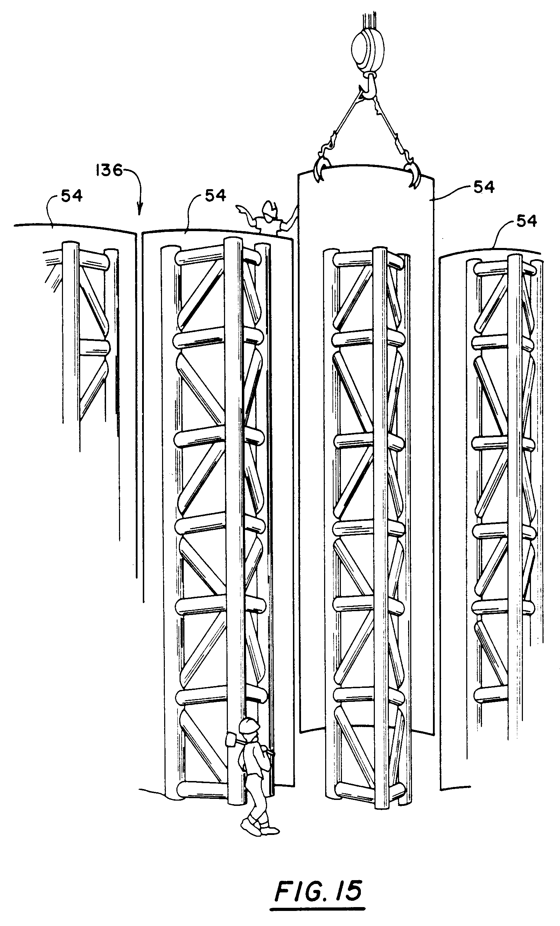

Curved and stiffened flat panels with acceptable coatings are lifted by a crane 131 (Figures 1 and 12), still in a vertical position on their respective end edges and placed either in buffer storage 132 or directly in the subassembly fixture 136 (as shown in Figure 15).

In the buffer storage 132 or fixture 136, the bottom edges of the curved and flat panels being stored or loaded into the fixture are aligned by landing them in guides 138.

The guides 138 provided at the bottom of the fixture 136 are used for precisely positioning the bottom edges of the curved and stiffened flat panels as they are lowered by crane into the fixture 136, without using temporary attachments.

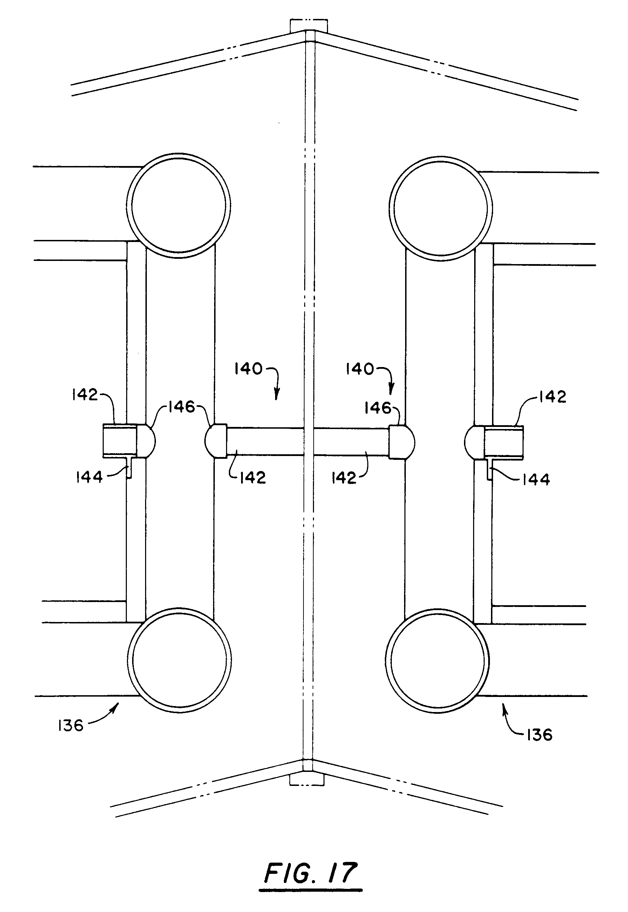

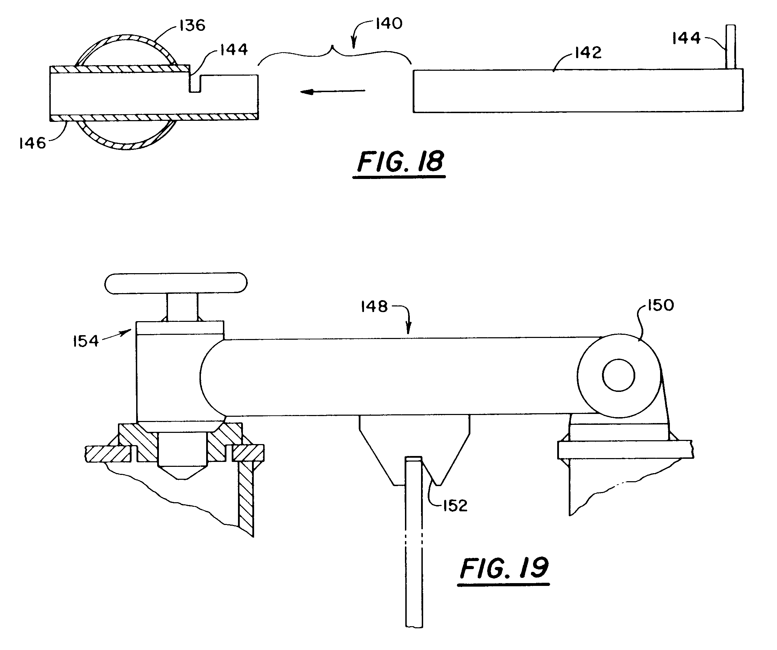

In the fixture 136, buckling of the stiffened flat panels is prevented by manually activating mechanisms 140 (Figures 17 and 18).

Each device 140, a plunger 142, which manually telescopes into and locks at 144 in a fixture leg tube 146, holds a flat stiffened panel in position, to keep the panels from buckling without using temporary attachments.

The top edges of the curved and flat panels are aligned by manually activating devices 148 (Figure 19).

The devices 148, hinged to one fixture leg at 150, notched at 152 to receive a plate edge and clamped to another fixture leg at 154 precisely position the tops of the curved and flat, stiffened panels, without using temporary attachments.

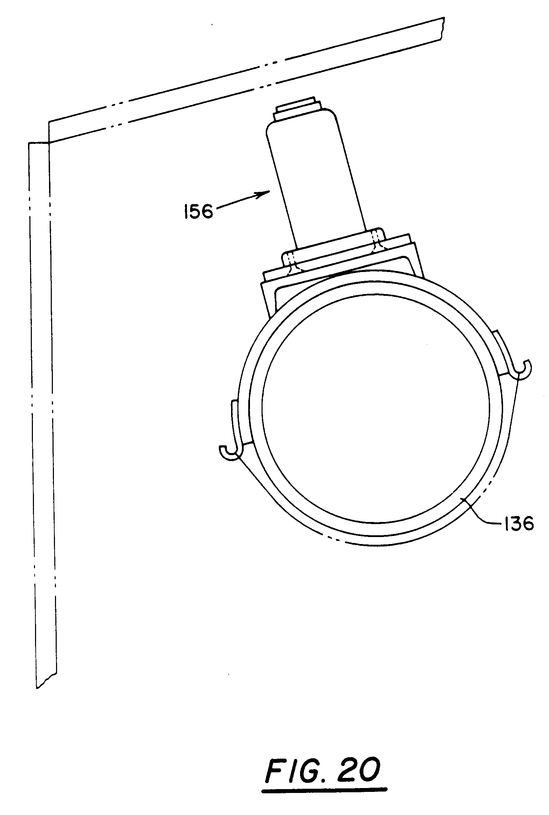

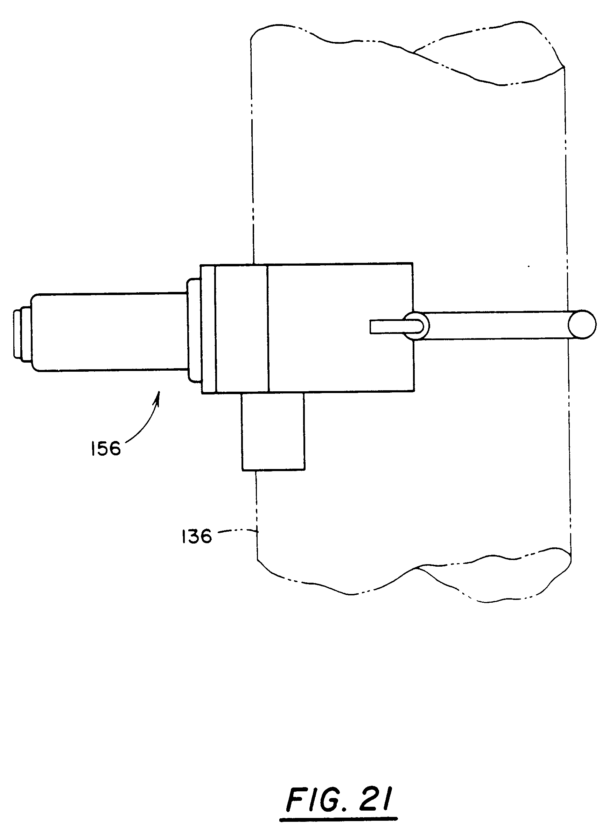

Local random unfairnesses throughout the height of curved and flat panels disposed in the fixture 136 are removed by activating mechanisms 156 (Figures 20 and 21).

The devices 156 apply external pressure at intermediate positions on either face of respective curved or flat plate panels to bring unfair edge portions of those plates into precise welding position, without using temporary attachments. Devices 156 are hydraulically operated and are portable, and can be moved around the fixture 136 and secured to legs or leg braces, as needed, and hydraulically activated to forcefully engage and thus fair the panels as required.

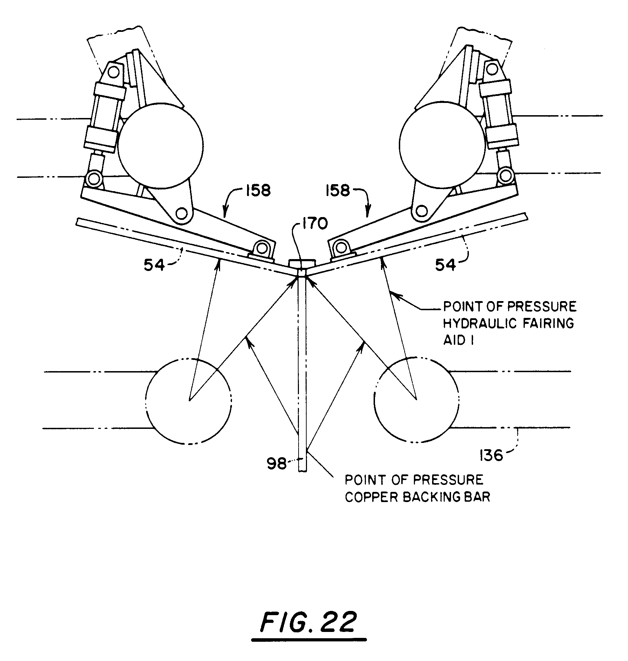

The hydraulically operated devices 158 (Figure 22) are operated to apply external pressure at intermediate positions along edges of the curved plate panels to positively position the edges against the continuous copper backing bars (to be described). Devices 158 are hydraulically operated and are fixed to legs of the fixture 136.

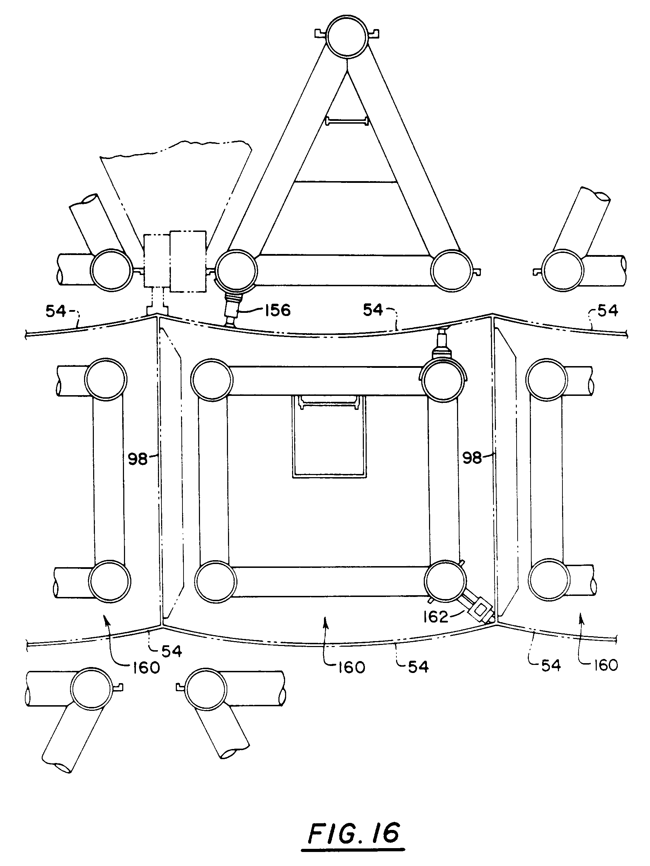

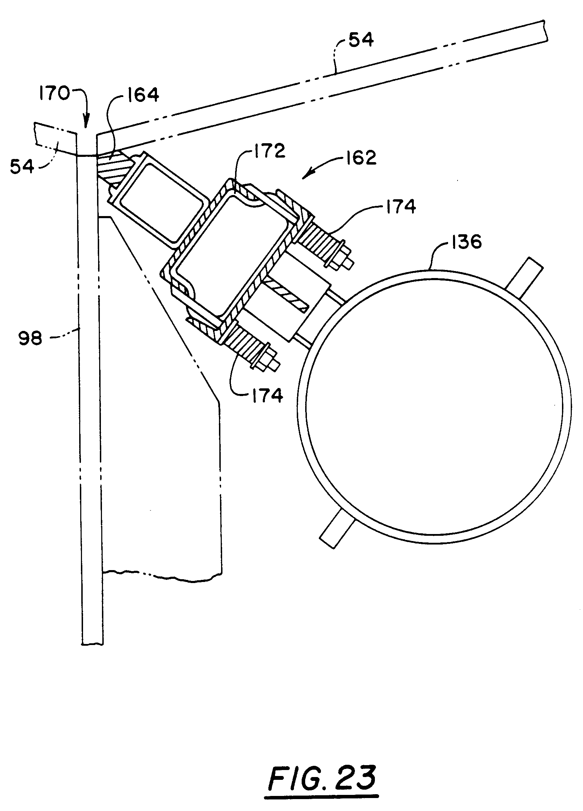

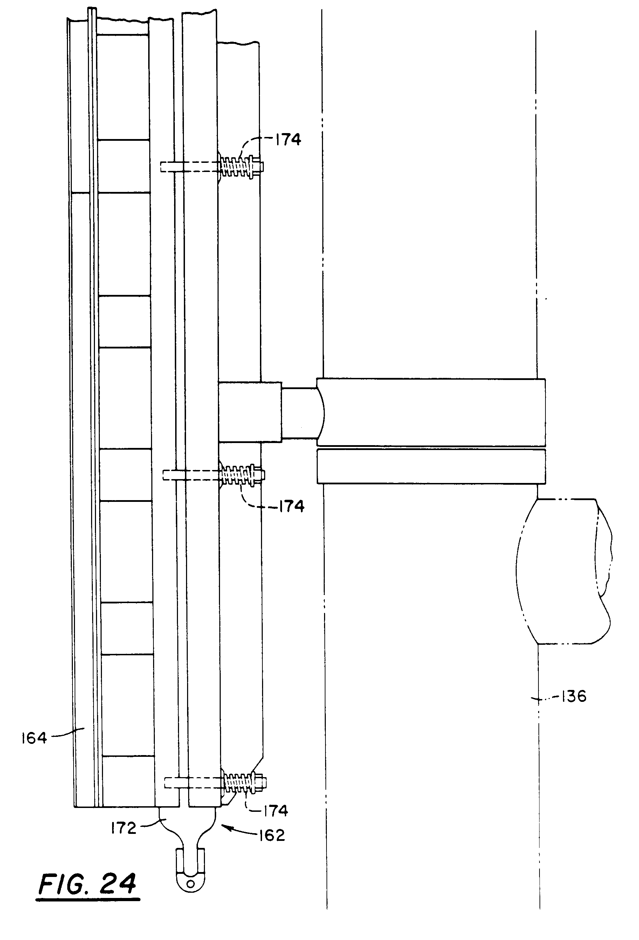

After all of the curved and flat panels have been brought into proper alignment in a given cell 160 of the fixture 136, mechanisms 162 (Figures 16, 23 and 24, only respective ones of which are shown), located in each of the four interior corners of each cell 160, are activated to position the continuous copper backing bars 164, 166, 168, which are variously of the cross-sectional configurations shown in Figures (23, 24, 27) 26 and 28.

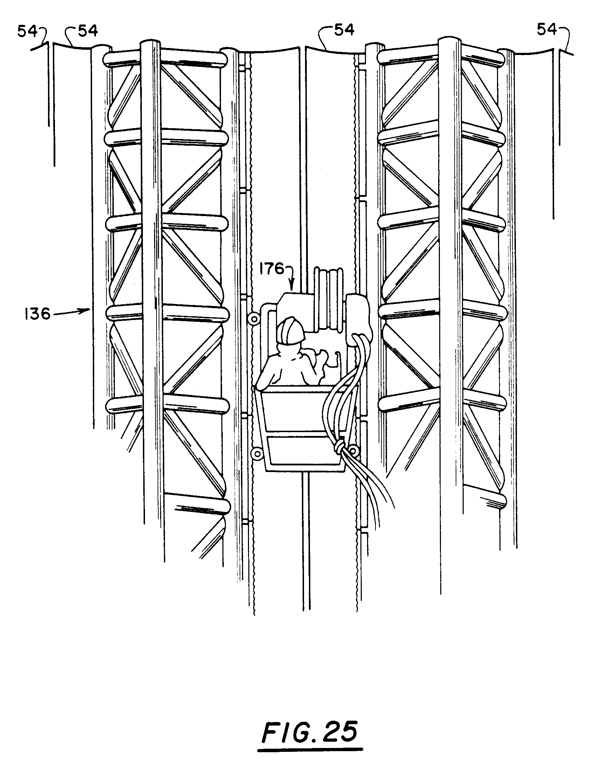

The devices 158 position the curved steel plate 54 of each near intersection 170 between adjacent edges of curved and stiffened flat panels 54, 98. The backing bars 164, 166, 168 are positioned pneumatically in the valley formed by edge margins of two respective panels, by inflating a flexible hose 172, thus forcing the backing bar 164, 166, 168 with positive force into damming relationship with the two panels near the intersection. When the electrogas welding (of Figure 25) is completed, air pressure is released from each hose 172 and a spring mechanism 174 returns the backing bars 164, 166, 168 to their original retracted positions.

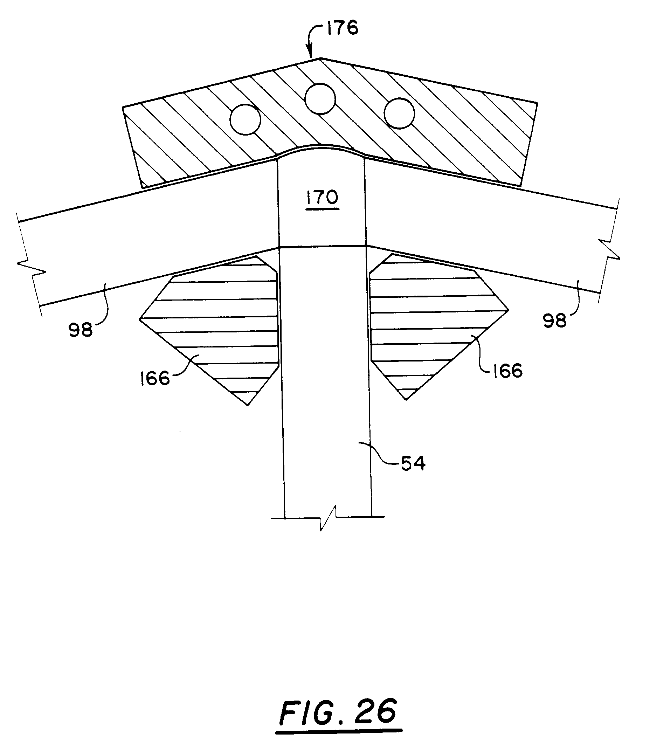

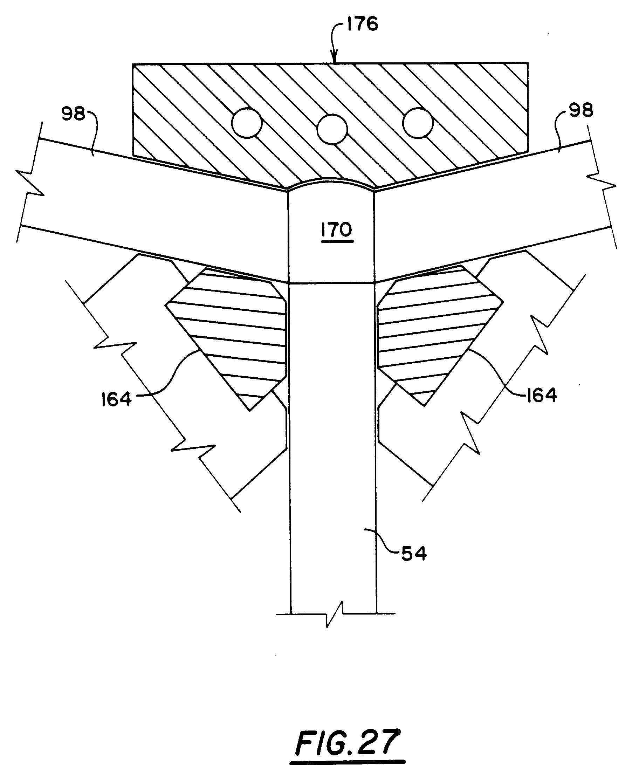

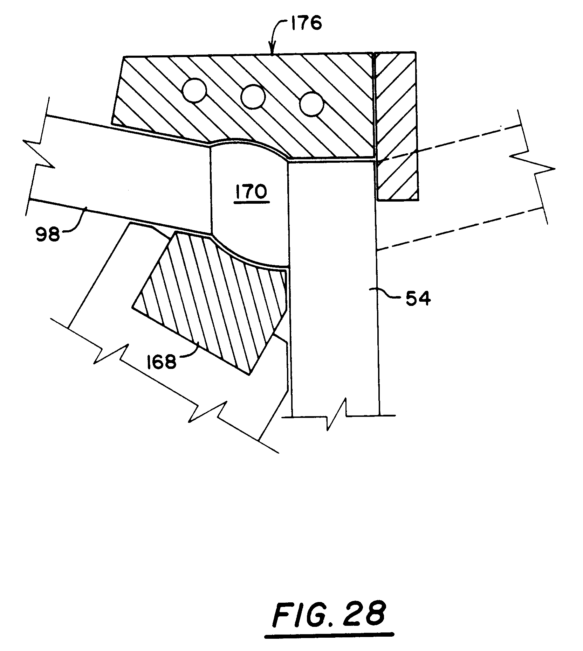

After the curved and flat panels 54, 98 are brought into alignment and the interior copper backing bars 164, 166, 168 are in extended, damming position, weld joints, joining three or two panels simultaneously, with transverse cross-sections shown in Figures 26, 27 or 28, are welded, using a vertical electrogas welding machine (Figure 25). As welding machine 176 vertically rises, it is followed by a vacuum-blast nozzle, or needle gun (not shown), which removes exterior welding slag, welding splatter, burned paint, and foreign matter. The cleaned surface is then primed and finish painted by the weld machine operator, e.g., using a paint spray applicator (not shown) as the operator lowers the welding machine 176.

After electrogas vertical welding is complete and exterior of the welds have been prime painted, the panel and backing bar alignment devices 140, 148, 156, 158 and 162 are released.

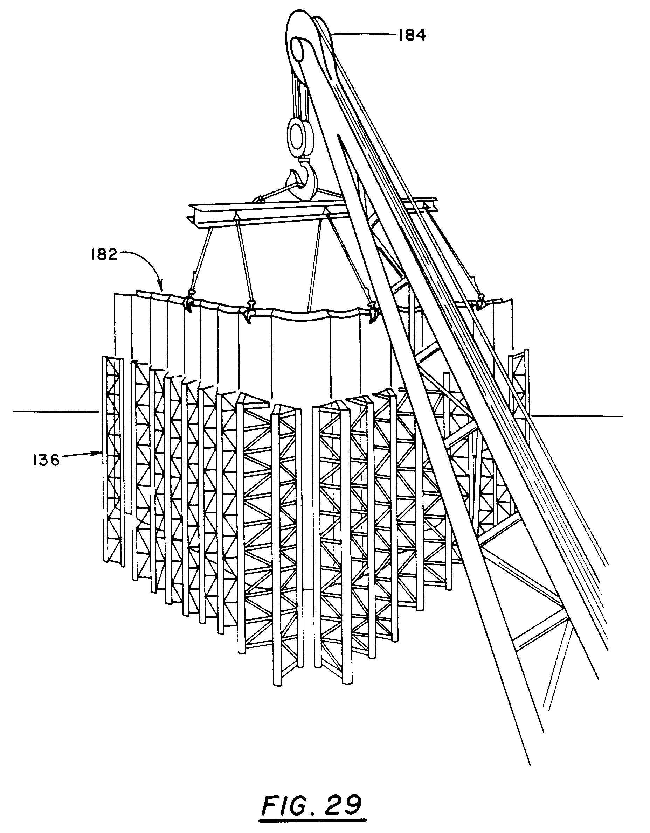

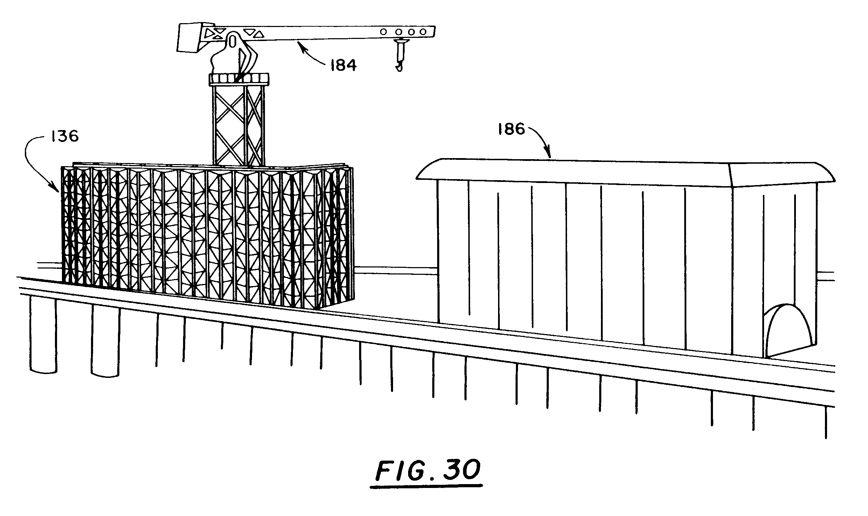

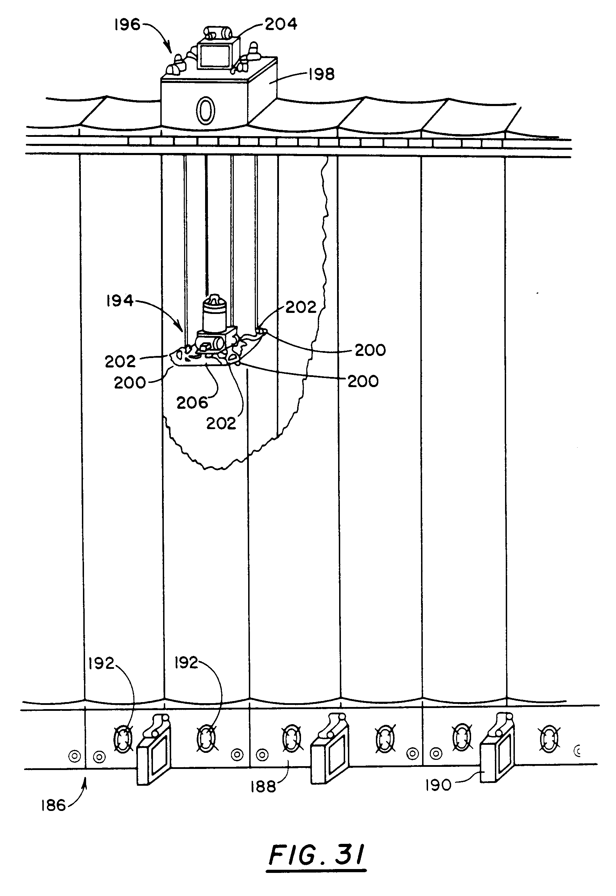

The painted subassembly 182 of panels and welds is then lifted from the fixture by a revolving crane 184 (Figures 1, 29, 30 and 40) and placed in a subassembly touch-up blast and paint facility 186 (Figures 1, 30 and 31).

The main purpose of the touch-up blast and paint facility 186 is to repair interior cell coating damage caused by subassembly welding along interior edges of joints formed at 170 which form the intersection of curved panels 98 and stiffened flat panels 54. The facility 186 includes a supporting structure 188 for the subassembly, with a built-in plenum for intake air to each interior cell 160 of the subassembly including means 190 for dehumidifying intake air and heating it, using steam coils or some other non-explosive means, and, in addition, a means of access 192 to the bottom of each cell 160 to service vacuum-blast and paint equipment 194.

The facility 186 further includes a touch-up blast and paint elevator platform mechanism 196 having a cover 198 which extends over a single interior cell 160 at a time and is adequate for weather protection of that cell.

The cover 198 is provided with an elevator platform 194 having four vacuum-blast nozzles 200 and four paint-spraying nozzles 202, one of each for each interior corner of a respective cell. The platform is suspended from the bottom of the cover at all four corners by a wire rope and pulley arrangement 196 which permits synchronous raising of each corner of the platform at speeds appropriate for both automatic vacuum blasting and automatic spray painting of corners of each individual subassembly cell where welding along the edges of the panels has damaged the coating.

An explosion-proof exhaust fan 204 is mounted in the cover 198, with replaceable filters that are capable of entrapping the paint overspray which will be created by spray painting repaired areas of coating along vertical edges at intersection of curved and stiffened flat panels damaged by welding.

The vacuum-blast machine 194 is mounted on the platform and has four nozzles 200 which are oriented toward the four interior corners of the subassembly cell to accomplish recyclable abrasive blasting of areas along panel edges where the coating has been damaged, in order to remove burned paint, weld slag, weld splatter and other foreign material as the platform is raised in an appropriate speed.

Similarly, four appropriate spray painting nozzles 202 with appropriate supporting air and paint hoses are attached to the platform 206 and oriented toward the interior corners of the respective subassembly cell 160 to enable spray painting of areas vacuum blasted above as the platform is raised at an appropriate speed.

The spray paint used for spray painting of cell corners can be urethane type of any other type that is compatible with the cathodic epoxy coating utilized on the curved and flat panels.

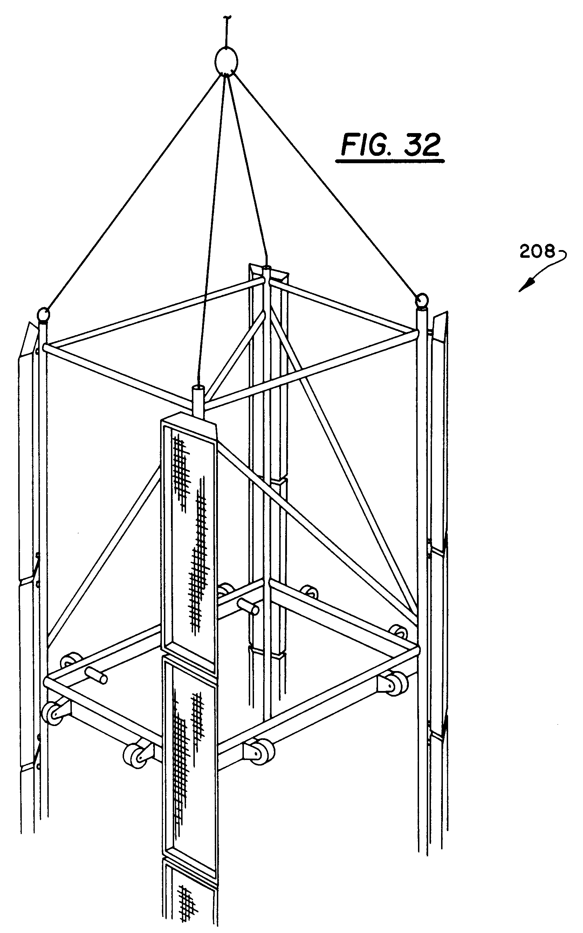

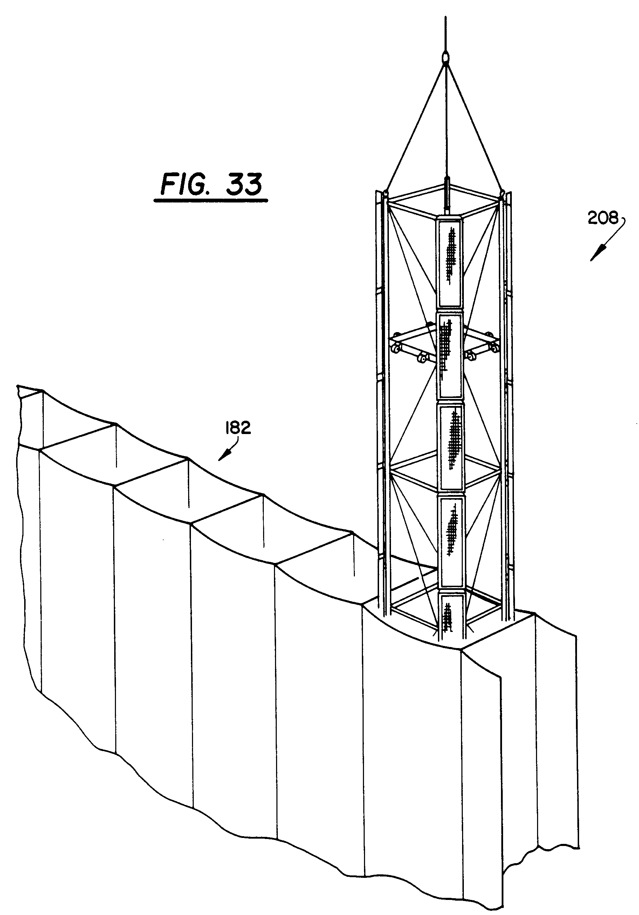

After coating is completed, the cover 198, complete with elevator platform 194, vacuum blast nozzles 200 and paint spraying nozzles, is moved successively to blast- and paint-damaged areas of all cells. As elevator platform 194 is removed from a cell, the infrared heating tower 208 depicted in Figure 32 is lowered into the cell just vacated by the elevator platform, as depicted in Figure 33, and energized for a period sufficient to cure the urethane paint just applied (approximately 30 to 90 minutes). This process is repeated successively until the urethane paint in all of the subassembly cells is cured.

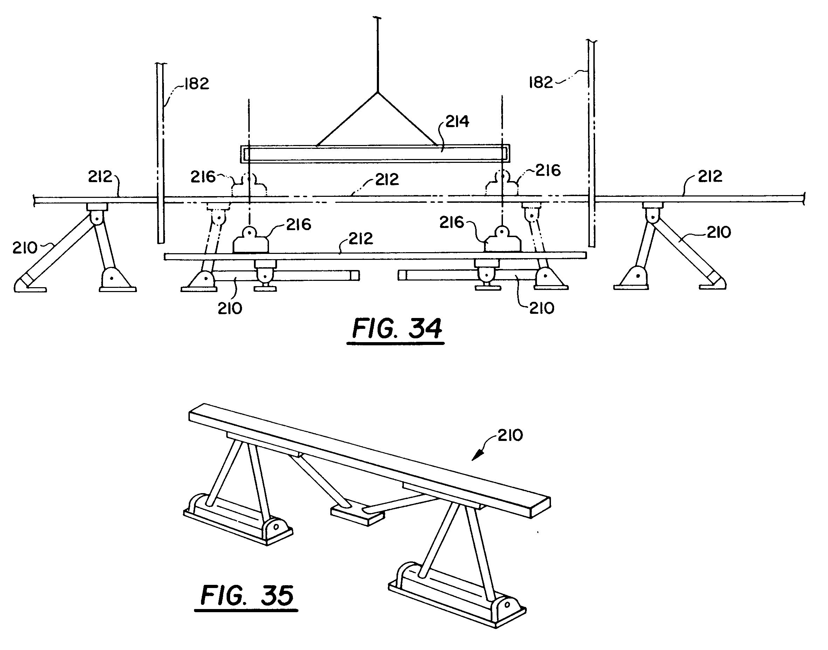

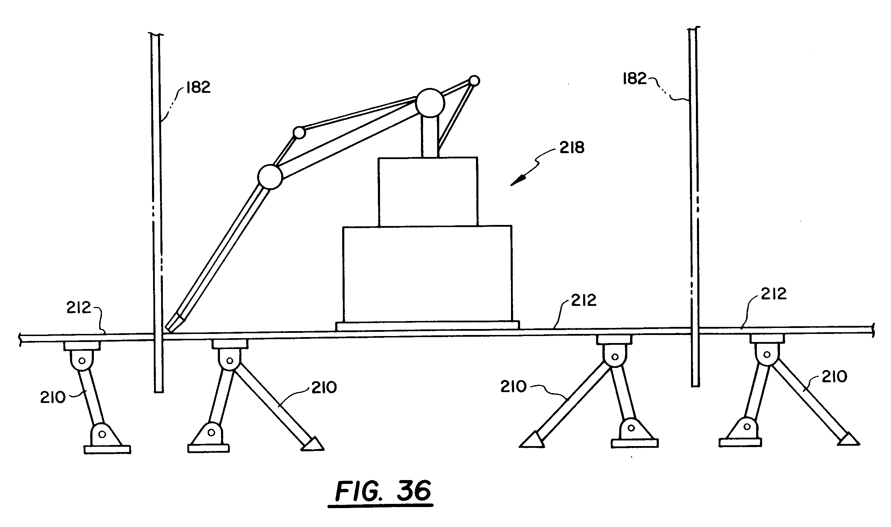

The subassembly 182, after this cleaning, painting and curing, is lifted from the touch-up blast and paint facility 186 using the revolving crane 184 and relocated over the transverse bulkhead-erecting devices 210 and transverse bulkheads 212 shown in Figures 34 and 35. The transverse bulkheads 212 are raised by a spreader bar 214 with attached electromagnets 216 attached to the revolving crane 184. As the electromagnets 216 raise the transverse bulkheads 212, the erecting devices 210, also influenced by the electromagnets 216, follow, until the transverse bulkheads 212 are properly positioned in the subassembly cells 182 (preferably approximately 12 inches from their bottoms). At this point, the transverse bulkhead-erecting devices 210 latch, as shown in Figure 35, and hold the transverse bulkheads in the proper position. These cell transverse bulkhead units are then welded robotically, as depicted in Figure 36, using robotic welder 218 or are welded manually.

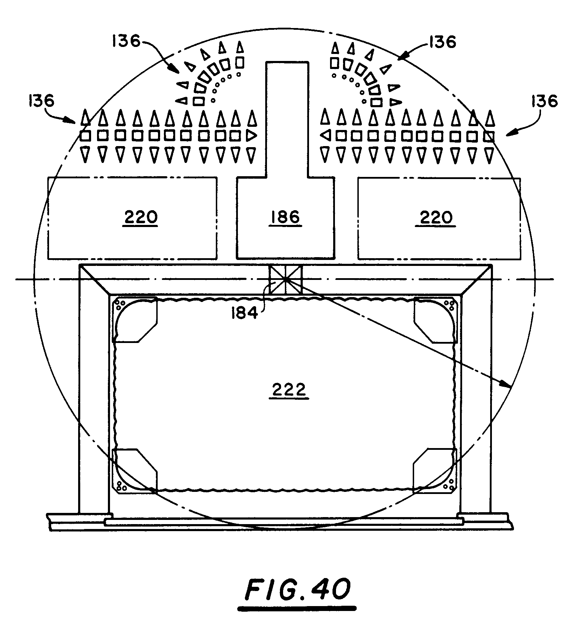

The subassembly 182, after installation and welding of cell transverse bulkhead units, is lifted from the subassembly transverse bulkhead installation facility 220 using a revolving crane 184 and is placed in the module assembly fixture and launching dock 222 shown in Figure 40.

Figure 40 depicts the general arrangement of a preferred assembly area including subassembly fixtures 136 for both curved and straight subassemblies, touch-up blast and paint facility 186, subassembly transverse bulkhead installation facilities 220, module assembly fixture and launching dock 222 and revolving crane 184 with a radius sufficient to service all of these areas.

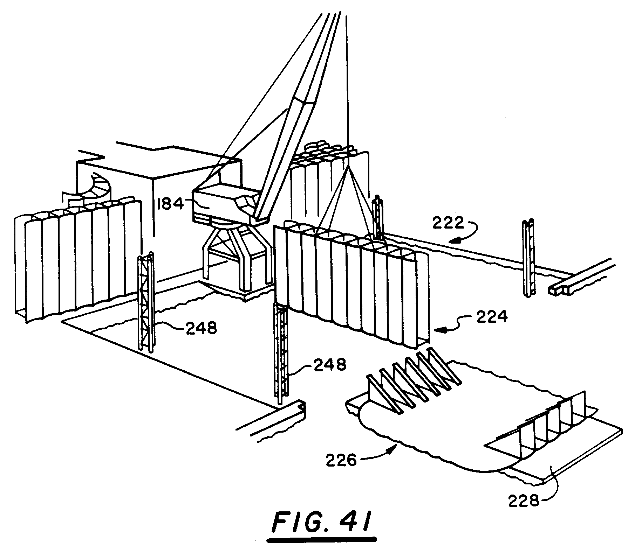

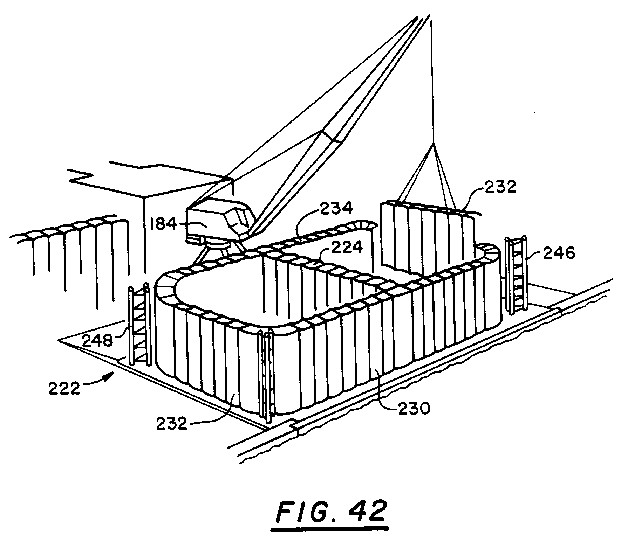

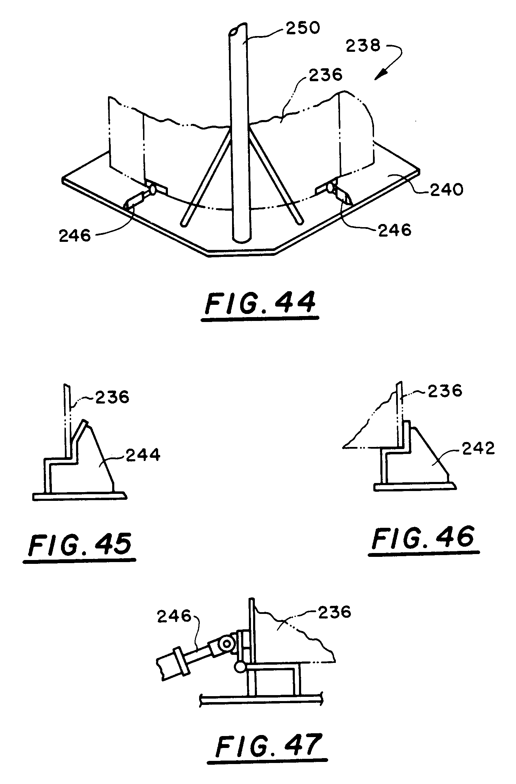

Referring to Figures 41-48, a module is created from the several subassemblies by placing a double longitudinal vertical wall 224 in the module assembly fixture and launching dock 222 with the revolving crane 184. Transverse bulkhead subassemblies 226 are then introduced into the module assembly fixture and launching dock 222 by barge 228, and placed in position alongside the double longitudinal vertical wall 224 by the revolving crane 184.

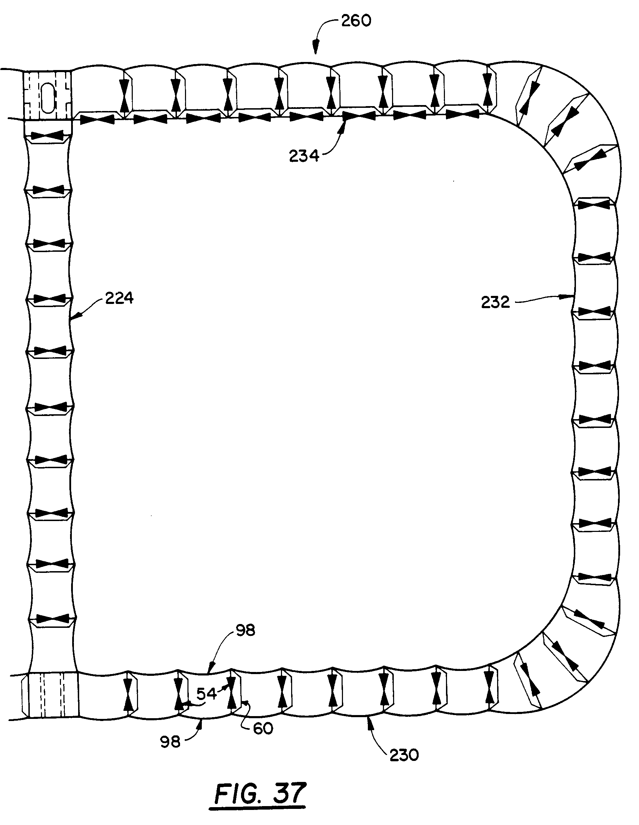

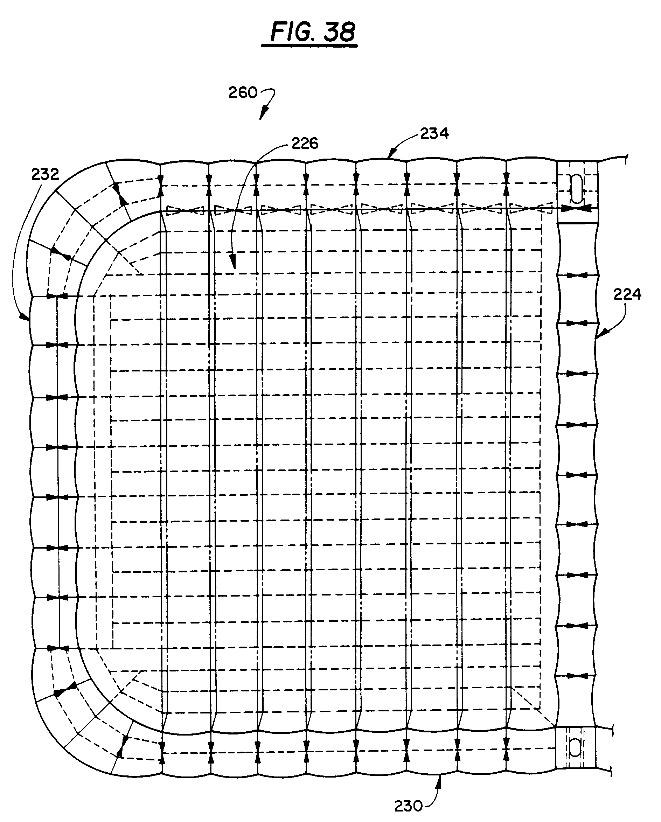

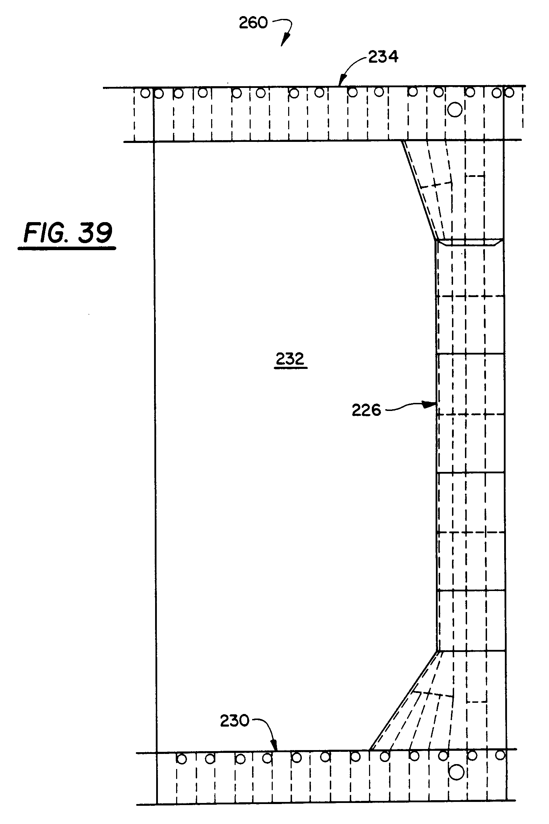

The remaining subassemblies making up a module having a double bottom 230, double side walls 232 and double deck 234, are then placed around the double longitudinal vertical wall 224 and transverse bulkheads 226 (Figures 37-39, 41 and 42) with the revolving crane 184.

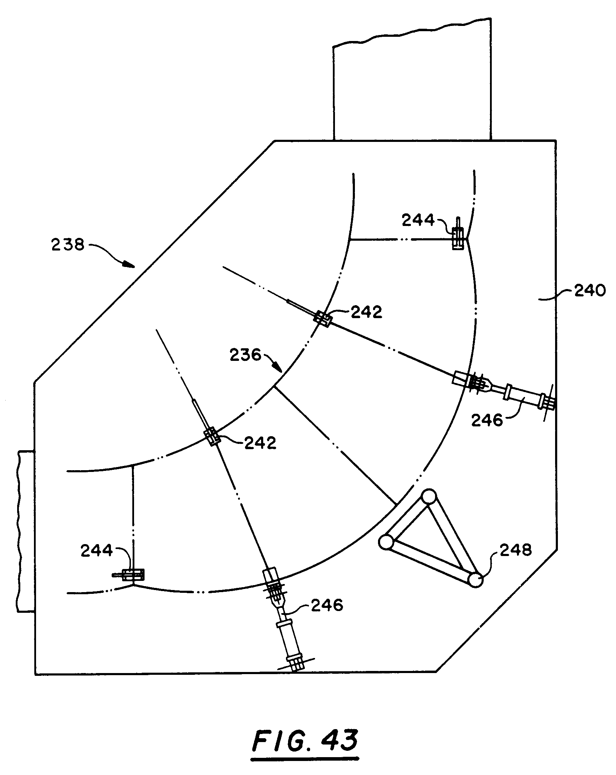

The curved subassemblies 236 are positioned very accurately in the module assembly fixture and launching dock 222 (Figures 43-48). This is accomplished by the curved subassembly alignment fixture 238 comprising a base 240, radial alignment stops 242, transverse alignment stop 244 and ram indices 246. The hydraulically operated ram indices 246 lock the curved subassemblies 236 against the stops 242, 244. The remaining subassemblies are then aligned to the curved subassemblies 236.

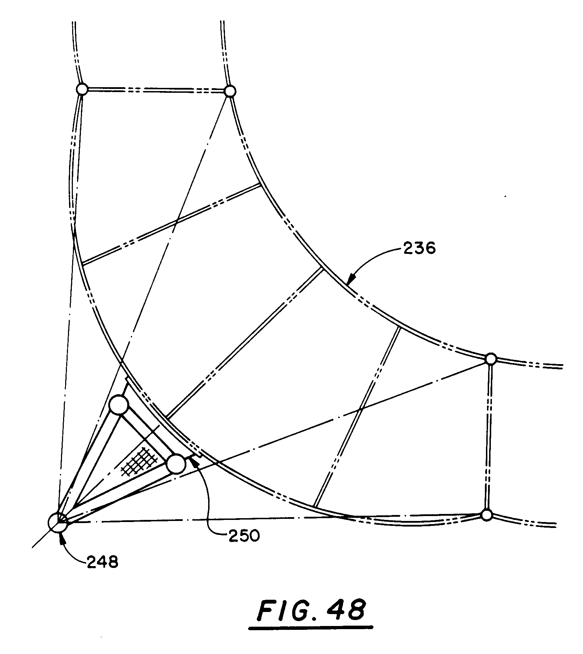

Integral with the curved subassembly alignment fixtures 238 are four rotating kingposts 248, each with a fixed index 250 which is used for positively aligning the tops of the subassemblies 236. Each fixed index 250, when rotated around kingpost 248 to a position shown in Figure 48, serves as a positive stop against the upper part of the respective subassembly 236. Comealongs, with cables or other simple devices, can be used to position the subassembly 236 against the fixed index 250. Later, the fixed index 250 can be rotated away from the subassembly 236 around the kingpost 248 so that the completed module can be removed from the module assembly fixture and launching dock.

The curved subassembly alignment fixtures 238 with rotating kingposts 248 are portable so that different module sizes can be assembled in the module assembly fixture and launching dock 222.

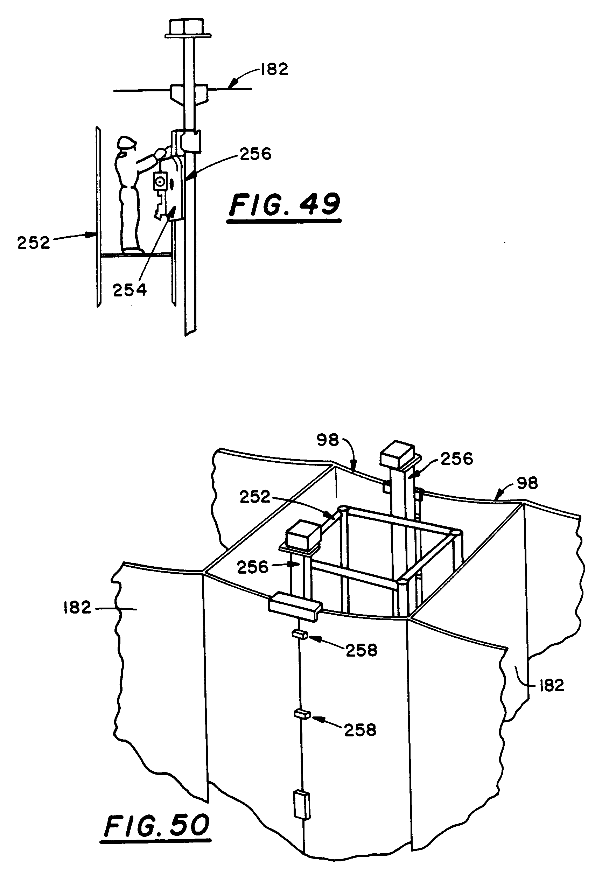

When alignment is complete, the subassemblies are joined together to form a module (Figures 49-51). An electrogas welding apparatus frame 252 is placed inside the subassembly cell at the place that the joints are to be made. Two electrogas welding units 254, one for each joint, are attached to the electrogas welding apparatus frame 252 by a vertical track 256. Each electrogas welding unit 254 operates independently on its own vertical track 256 attached to the electrogas welding apparatus frame 252. To keep the edges of this joint fair and true, a series of joint fairing clamps 258 are attached to the subassembly curved plates 98 at the joints. The operator removes the joint fairing clamps 258 as the electrogas welding unit 254 progresses up the joint.

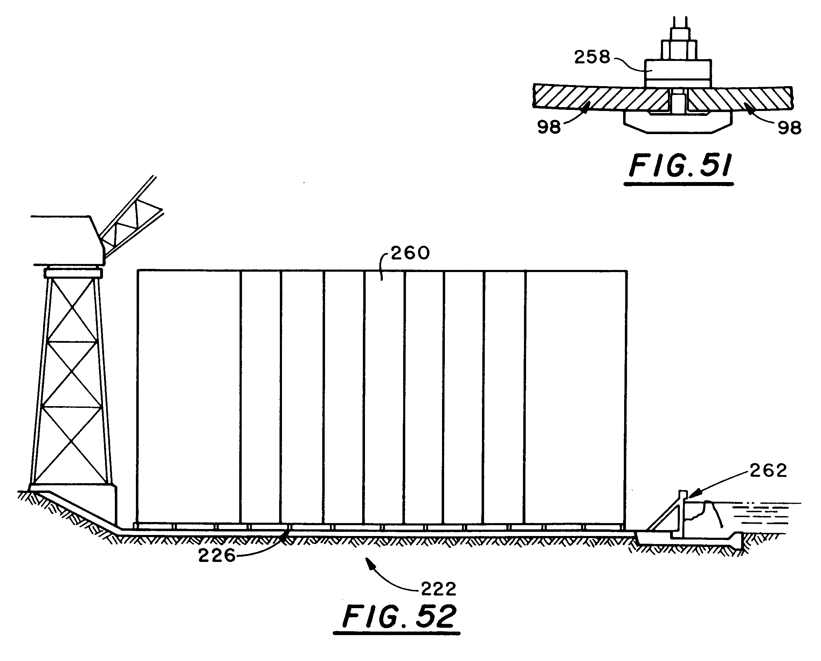

After completion of welding, a module 260, ready for launching, has been assembled (Figure 52). The module 260 is launched by opening valves in the launching dock gate 262 and, thus, allowing seawater to flood the module assembly fixture and launching dock 222 until the module 260 floats, using the transverse bulkheads 226 as a bottom. The launching dock gate 262 is then opened.

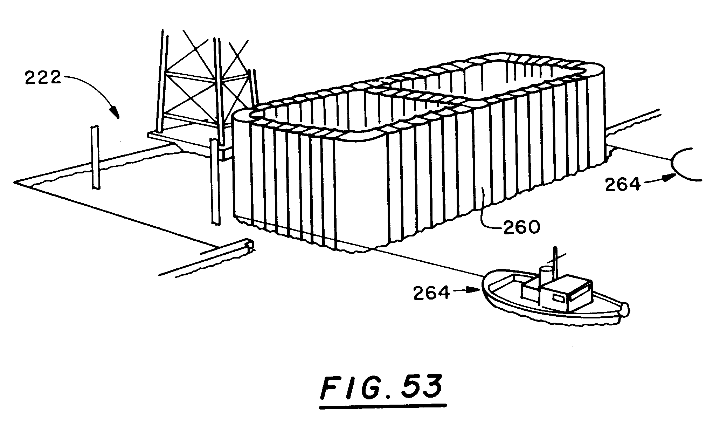

The module 260 can then be removed from the module assembly fixture and launching dock 222 by means of tugboats 264 or other suitable means (Figure 53). Alternately, the module 260 will be constructed at ground level, translated to a launching sled upon final welding of longitudinal structure and launched by lowering a launching sled down inclined ways until the module floats off.

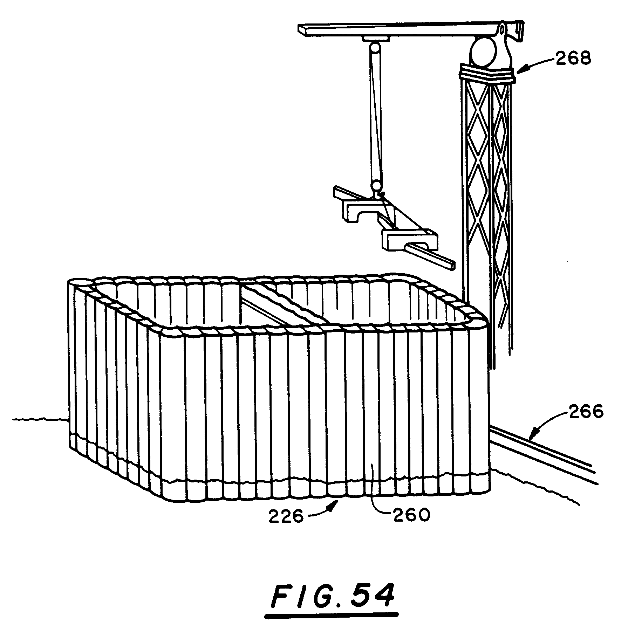

Referring to Figure 54, various internal piping and structural outfitting assemblies (foundations, ladders, etc.) are loaded into the open end of the module 260 floating in water on its bulkhead 226 alongside a shipyard pier 266 using a pier crane 268 and temporarily secured until the module 260 can be subsequently turned to its upright position.

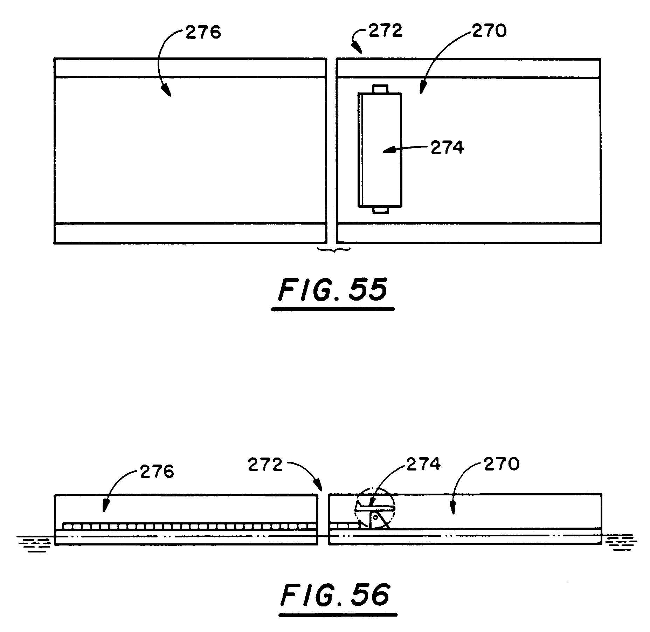

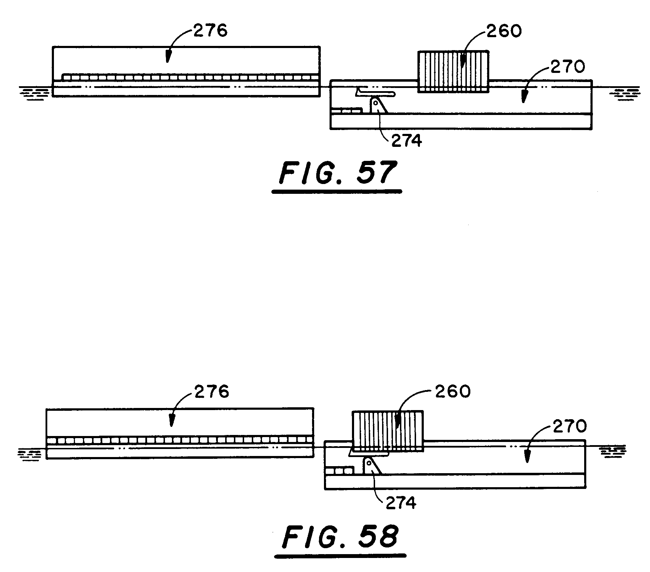

Referring to Figures 55 through 62, the module 260 is translated from its position floating in water on its bulkhead 226, to its upright position high and dry on the outboard section 270 of a two-section floating drydock 272. This is accomplished by installing a module-turning trunion 274 on the floating drydock outboard section 270 and sinking the floating drydock outboard section 270 by pumping river water into its ballast tanks sufficiently to permit the floating module 260 to be floated to a location over the module-turning trunion 274 (Figures 57 and 58).

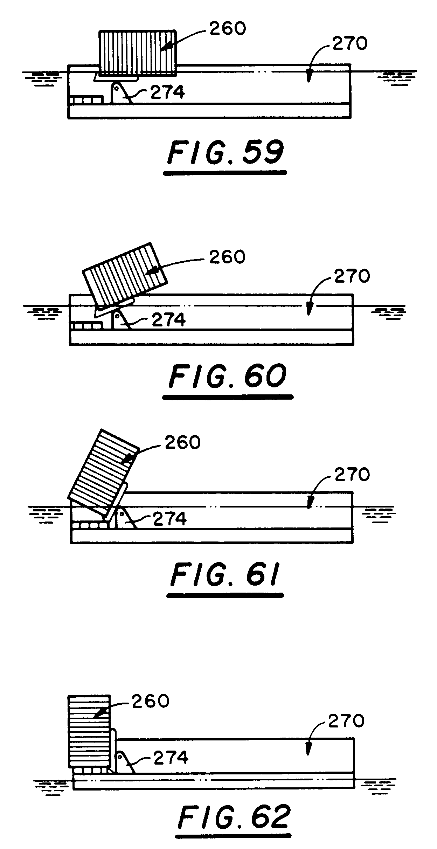

The double-bottom tanks of the module are then filled with approximately one-thousand tons of salt water to make the product of the weight and moment arm of the bottom of the module (to the left of the trunion in Figure 59) greater than the product of the weight and moment arm of the top of the module (to the right of the trunion in Figure 59).

Referring to Figures 59 through 62, the river water in the ballast tanks of the outboard section of the floating drydock 270 is pumped out progressively, causing the floating drydock section with its module 260 load to rise out of the water concurrently, causing the module 260 to progressively turn on the axis of the module-turning trunion 274 as the water buoyancy supporting the module 260 is progressively eliminated. With all water buoyancy supporting the module 260 eliminated as the drydock section rises completely out of the water, the module 260 turns into its full upright position (Figure 62).

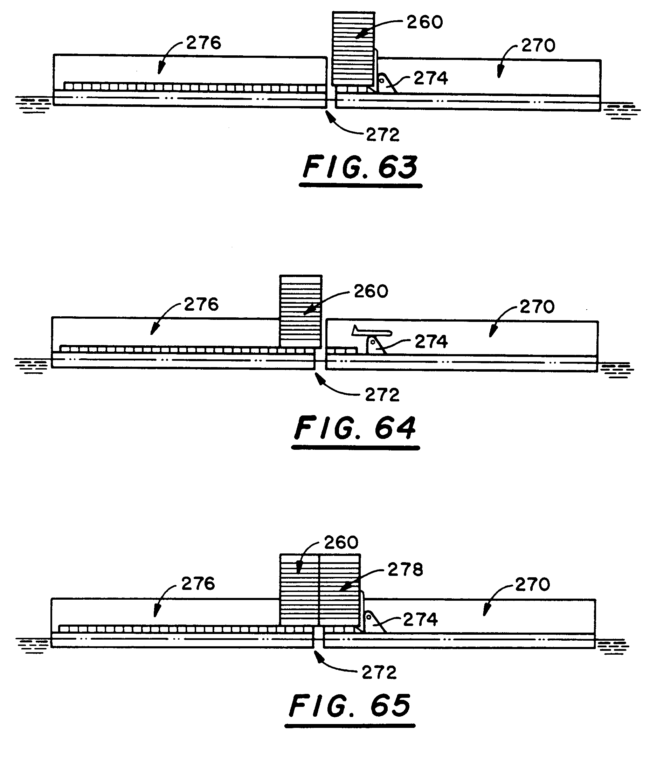

Referring to Figures 63 and 64, the module is then pulled from its inboard position on the outboard floating drydock section 270 to the outboard position on the inboard floating drydock section 276, utilizing a winch for pulling the module 260, and rollers on tracks for supporting the weight of the module 260.

Referring to Figure 65, a second module 278 is turned to an upright position using the same procedure as that utilized for turning the first module to an upright position. The second module 278, resting on the inboard end of the outboard section of the floating drydock 272, is joined by welding to the first module 260 resting on the outboard end of the inboard section of the floating drydock.

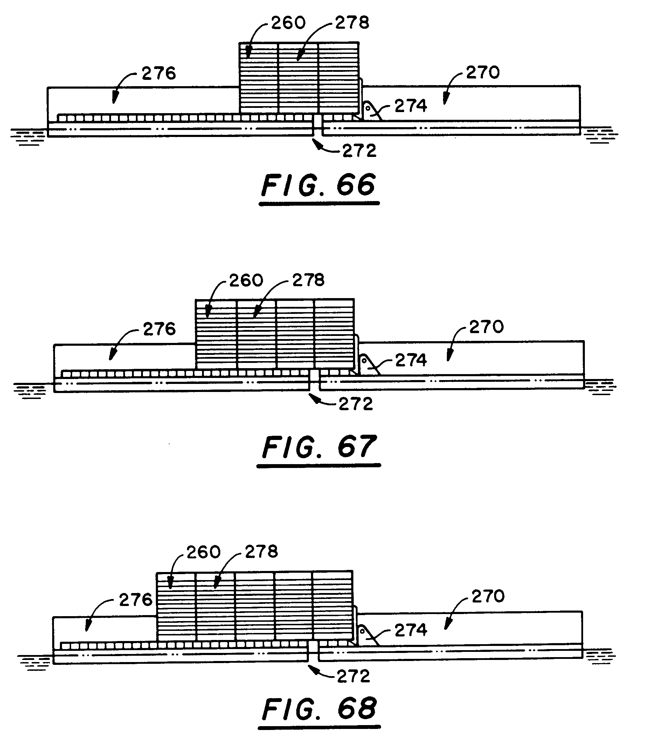

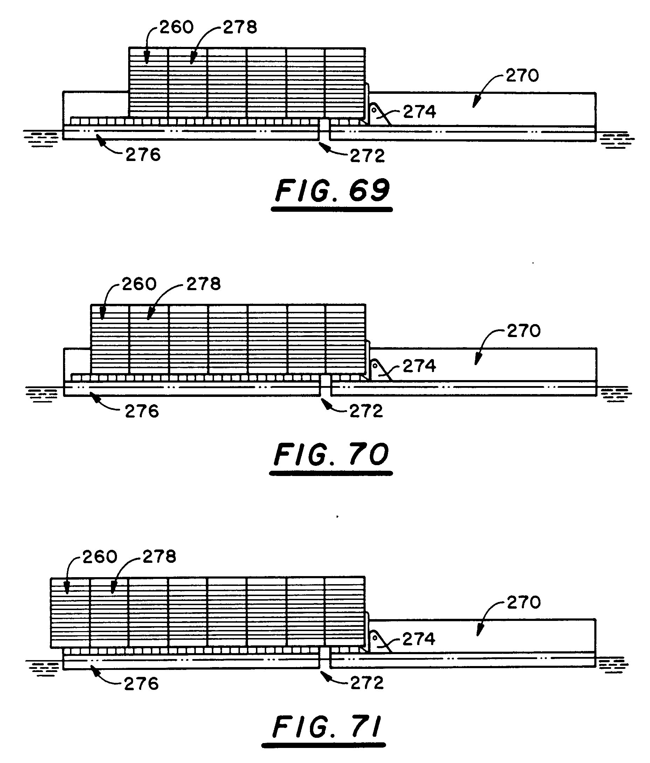

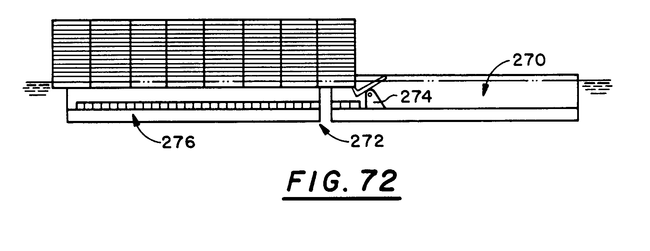

Referring to Figure 66, combined first and second modules are pulled approximately 50 feet using the same procedure as used in pulling the first module alone. Repeating the procedures depicted in Figures 65 and 66, another six modules are joined by welding to the first two modules (Figures 66 through 71) joining a total of eight modules (and, thereby, forming one-half of a double-hull tanker midbody), and launched off both sections of the floating drydock as depicted in Figure 72. A second half of a double-hull tanker midbody is manufactured and launched using the same procedure.

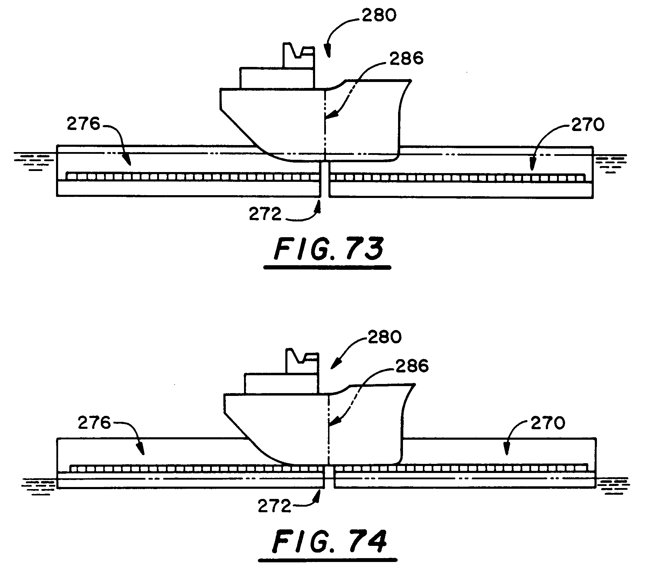

Referring to Figure 73, a tanker bow/stern vessel 280 (i.e., a vessel which is minus a midbody, but otherwise complete and functional including all machinery and accommodations) is acquired from a traditional shipyard and drydocked such that its stern 282 is completely on the inboard section of the two-section floating drydock 276, its bow 284 is completely on the outboard section of the two-section floating drydock 270 and the joint 286, joining the bow 284 and stern 282, is precisely over the joint, joining the two sections of the floating drydock 272.

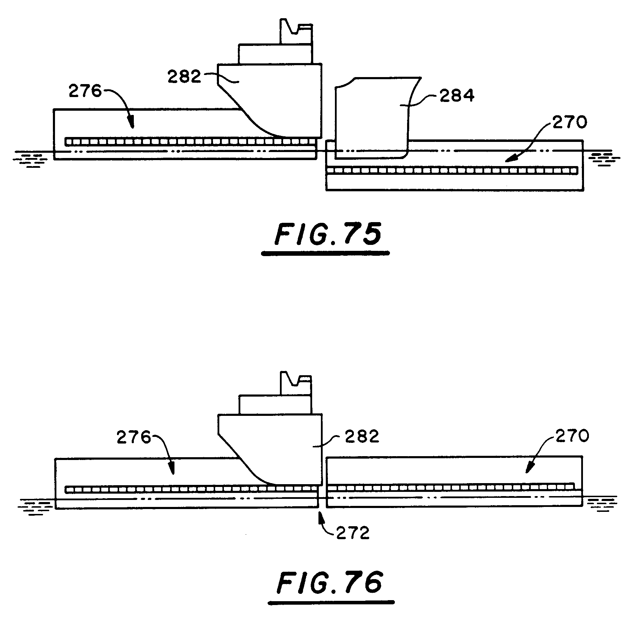

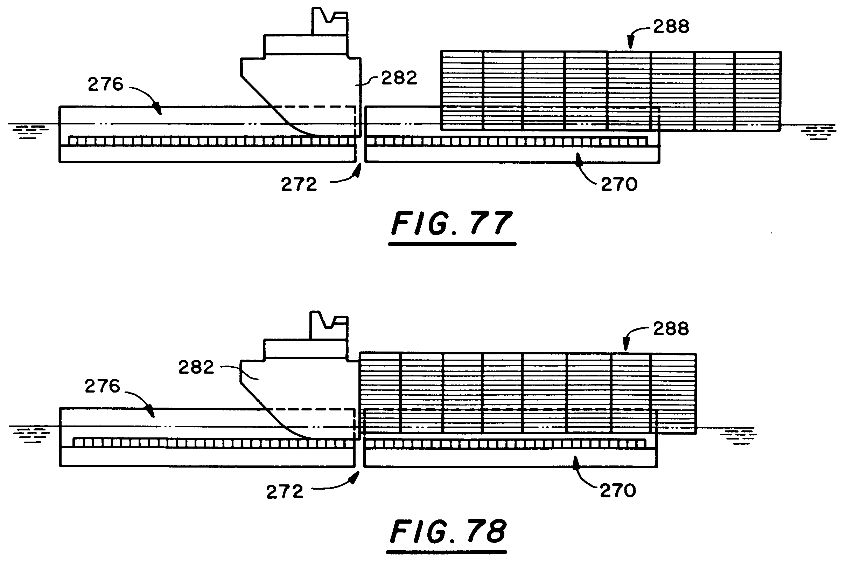

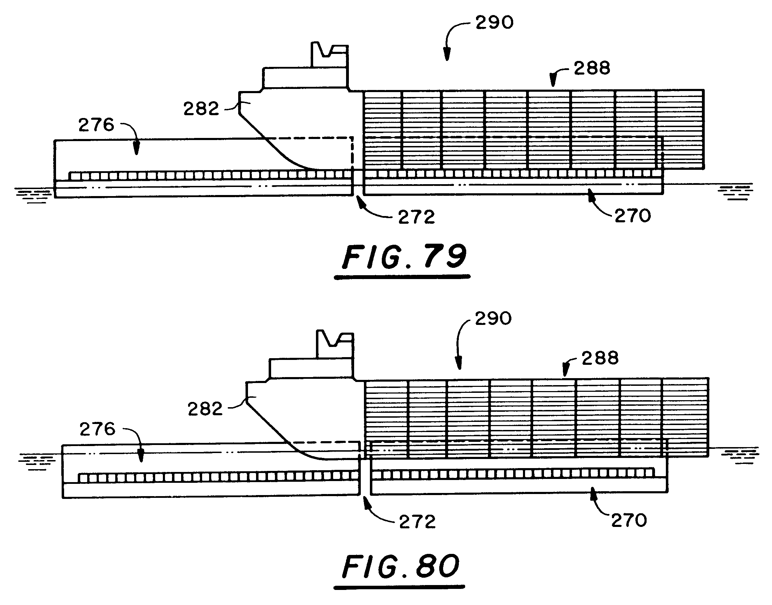

Referring to Figures 74 through 80, the joint 286 between the bow 284 and stern 282 is cut using oxygen-acetylene burning torches. Then, the bow 284 is undocked by submerging the outboard section of the floating drydock 270 and one-half of the double-hull tanker midbody 288 is drydocked in place of the tanker bow 284 and joined to the tanker stern 282 by welding, thereby forming a double-hull tanker afterbody 290. This tanker afterbody 290 is then launched into the river by submerging both sections of the floating drydock.

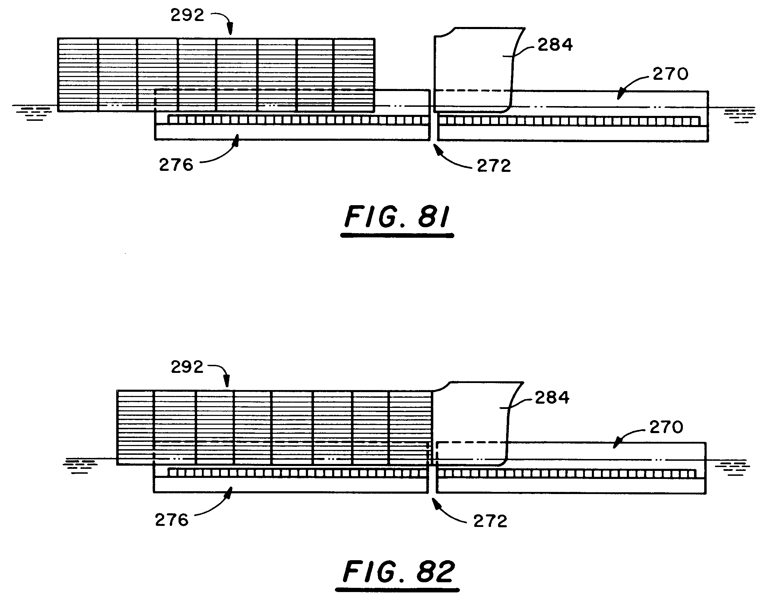

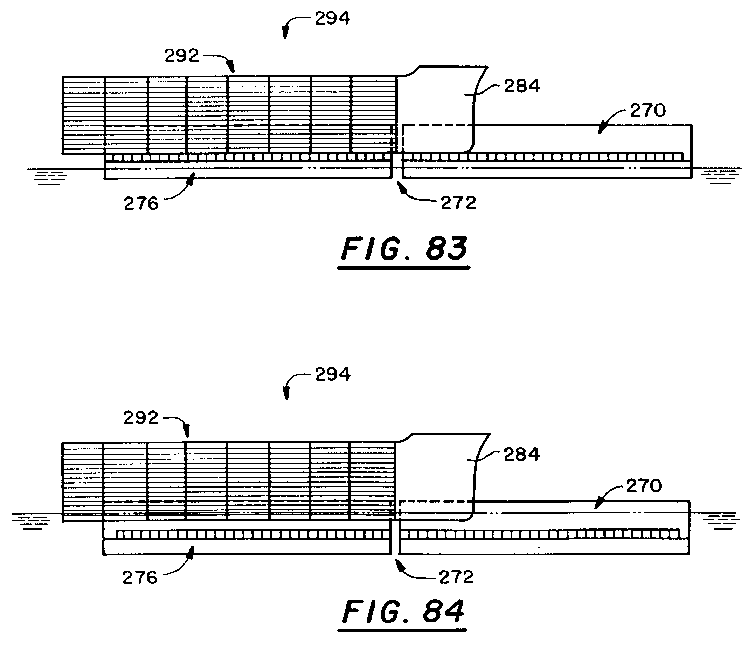

Referring to Figures 81 through 84, the tanker bow 284 and the other half of the double-hull tanker midbody 292 are drydocked using both floating drydock sections 272 and joined by welding, forming a double-hull tanker forebody 294. This tanker forebody 294 is then launched into the river by submerging both sections of the floating drydock 272.

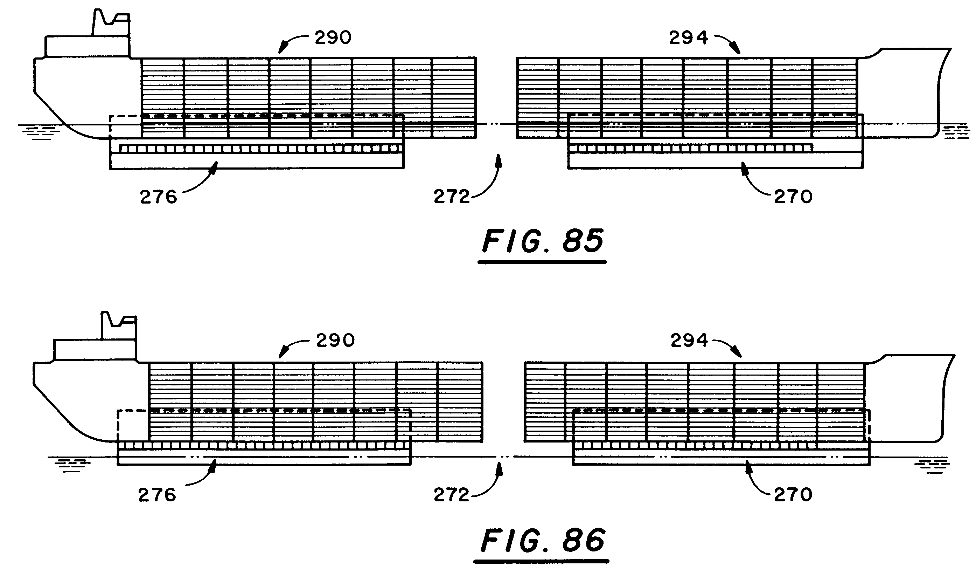

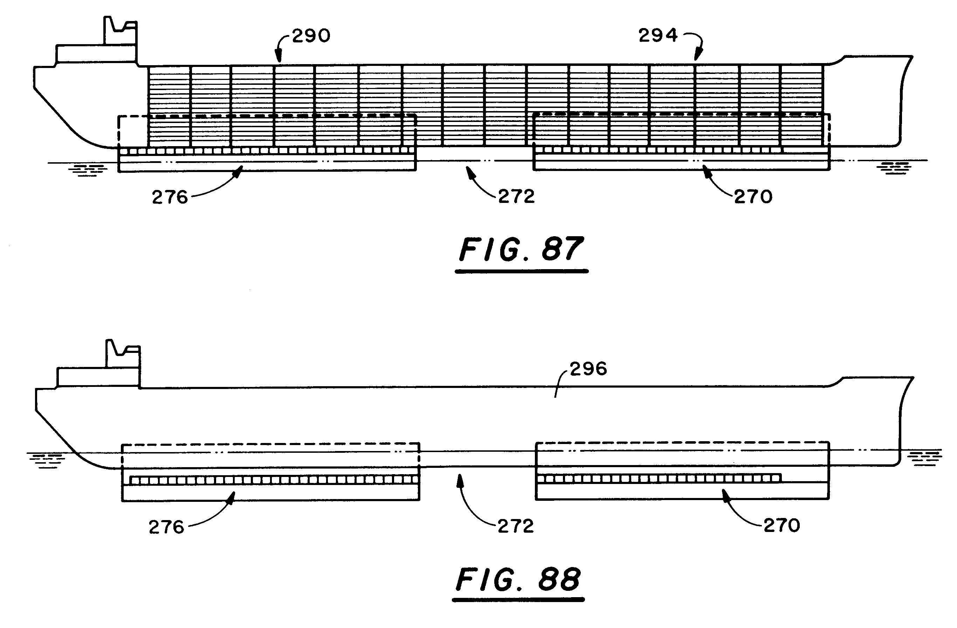

Referring to Figures 85 through 88, the tanker forebody 294 is drydocked on one section of the floating drydock 270 and the tanker afterbody 290 on the other section of the floating drydock 276. The tanker forebody 294 is then pulled together with the tanker afterbody 290 and joined together by welding, thereby forming a complete double-hull tanker 296. This complete double-hull tanker is then launched by submerging both sections of the floating drydock 272.

It should be appreciated that the vessel hull construction and method as described hereinabove, can be modified without departing from the principles thereof as they have been outlined and explained in this specification, and the present invention should be understood as encompassing all such modifications as are within the scope of the following claims.

## Claims

1. A method of erecting an object from an upended to an upright orientation, the method including disposing the object on a support which is mounted for pivotal movement about a substantially horizontal axis between a substantially horizontal first position, and a substantially vertical second position, and pumping water out of ballast tanks of the floating support so as to cause said upended object (260) on said support to rotate about said axis, with said support, until said support has said second, generally vertical position and said object (260) is upright;
characterised in that said object is a vessel hull module (260) for a double-walled tanker midbody, said module including inner and outer hulls interconnected by longitudinal plates so as to define double-hull left, right and bottom walls (232, 232 and 230) each comprising a respective series of longitudinal cells (160), a deck 234 bridging between said left and right walls (232), and transverse bulkhead means (226) closing corresponding one ends of said cells and a corresponding one end of the space defined peripherally inwardly of said left, right and bottom walls and said deck, the opposite ends of said space being open;
said method comprising;
(a) providing a floating drydock (272) having at least one section (270) which is capable of being elevated and depressed in a body of water by pumping out and flooding said ballast tanks;
(b) providing on said floating drydock (270) a trunnion assembly (274) including said support and trunnions journalling the support for pivotal movement about said substantially horizontal axis between said substantially horizontal first position, and said substantially vertical second position;
(c) disposing said floating drydock (270) in a body of water in a floating condition and disposing in the same body of water, adjacent said drydock, said module (260) in an upended condition, floating with its closed end down;
(d) depressing said drydock section (270) by flooding said ballast tanks thereof and floating said upended module onto said support, with said support in said first, generally horizontal position, so that said upended module (260) is supported on said support with said bottom wall (230) and said deck (234) of said upended module disposed on opposite sides of an imaginary vertical plane containing said axis of said trunnion assembly (274);
(e) filling a heavier-than-air fluid medium into at least some of said cells (160) and pumping water out of the ballast tanks of said drydock section (270), so as to gradually elevate said drydock section (270) and thereby cause said upended module (260) on said support to rotate about said axis, with said support, until said support has said second, generally vertical position and said module (260) is upright and rests on a support surface which is located adjacent to said support of said trunnion assembly (274).

2. A method according to claim 1, wherein step (e) comprises filling a heavier-than-air fluid medium into at least some of said cells (160) of said bottom wall (230).

3. A method according to claim 1 or 2, wherein said heavier-than-air fluid medium is water.

4. A method according to claim 1 or 2, wherein said body of water is a body of fresh water and said heavier-than-air fluid medium is seawater.

5. A method according to any preceding claim wherein said support surface is located on said floating drydock section (270).

6. A method according to any preceding claim wherein step (c) includes assembling said module (260) on said floating drydock section (270) from a plurality of hull and deck subassemblies (182) and transverse bulkhead elements (226), while said floating drydock section (270) is elevated in said body of water.

7. A method according to claim 6, further including: as part of step (c),
depressing said elevated floating drydock section (270) and floating off thereof said upended module (260) into said body of water; and
installing additional structural elements in said upended module (260) while said upended module is floating in said body of water.

8. A method according to claim 7, including, while said upended module (260) is floating in said body of water, likewise successively assembling a plurality of like modules (260) on said floating drydock section (270) and floating each off into said body of water as a respective upended module.

9. A method of fabricating a major component of a double-hulled tanker, comprising:
erecting from an upended to an upright orientation a vessel hull module (260) for a double-walled tanker midbody, by a method according to claim 8, steps (d) and (e) being successively conducted on each of said modules (260);
(f) shifting along said support surface each upright module (260) most recently subjected to step (e) along its own longitudinal axis away from said trunnion assembly (274) before each respectively successive conduct of step (e); and
(g) serially connecting all of said upright modules (260) to one another end-to-end, thereby providing a tanker longitudinal midbody component (288 or 292).

10. A method according to claim 9, further comprising:
(h) providing a second said floating drydock section (276) adjacent the first-described said floating drydock section (270); and
as step (f) is conducted, shifting the respective upright module (260) most recently subjected to step (e) from said support (274) on said first-described floating drydock section (270), onto said second floating drydock section (276); step (g) being conducted on said second floating drydock section (276).

11. A method according to claim 10, wherein:
at each instance while conducting step (g) that a respectively more recently assembled said upright module (260) is connected end-to-end to a respectively previously assembled said upright module (260), the respective more recently assembled said upright module is supported on said first-described floating drydock section (270) and the respective previously assembled said upright module is supported on said second floating drydock section (276), and the respective module ends to be connected to one another are disposed effectively between said first-described and second floating drydock modules; and, as part of said each instance, said first-described and second floating drydock modules are positionally adjusted relative to one another on said body of water for aligning the respective said module ends to be connected.

12. A method according to claim 11, further comprising:
(i) after step (h) has been completed, providing on said support surface of said first-described floating drydock section (270) one of a tanker bow section (284) and a tanker stern section (282) having an end effectively disposed between said first-described and said second floating drydock sections (270 and 276) in juxtaposition with an end of said tanker longitudinal midbody component 288 or (292);
(j) connecting said end of said tanker longitudinal midbody (288 or 292) to said end of said one of said tanker bow section (284) and stern section (282), to thereby provide a respective bow- or stern-ended tanker midbody component (290 or 294); and
(k) depressing said first-described and second floating drydock sections and floating said respective bow- or stern-ended tanker midbody component (290 or 294) therefrom onto said body of water.

13. A method of fabricating a double-hulled tanker, comprising:
fabricating a first tanker longitudinal midbody component (292) by a method according to claim 11,
(i) after step (h) has been completed, providing on said support of said first-described floating drydock section a tanker bow section (284) having an end effectively disposed between said first-described and said second floating drydock sections in juxtaposition with an end of said tanker longitudinal midbody component;
(j) connecting said end of said tanker longitudinal midbody to said end of said tanker bow section, to thereby provide a bow- ended tanker midbody component (294); and
(k) depressing said first-described and second floating drydock sections and floating said bow-ended tanker midbody component therefrom onto said body of water;
(l) repeating the series of steps (a) - (h) to provide a second tanker longitudinal midbody component (288);
(m) after step (l) has been completed, providing on said support of said first-described floating drydock section a tanker stern section (282) having an end effectively disposed between said first-described and said second floating drydock sections in juxtaposition with an end of said second tanker longitudinal midbody component;
(n) connecting said end of said second tanker longitudinal midbody to said end of said tanker stern section, to thereby provide a respective stern-ended tanker midbody component;
(o) depressing said first-described and second floating drydock sections and floating said stern-ended tanker midbody component therefrom onto said body of water;
(p) maneuvering said bow-ended and stern-ended tanker midbody components (294 and 290) and said first-described and second floating drydock sections (270 and 276) so that one of said components is supported by said first-described floating drydock section and the other of said components is supported by said second floating drydock sections, with respective free ends of each juxtaposed effectively between said first-described and second floating drydock sections and said components in longitudinal alignment;
(q) joining said free ends together to provide a double-hulled tanker (296); and
(r) depressing said first-described and second floating drydock sections (270 and 276) and floating said double-hulled tanker (296) therefrom onto said body of water.

14. A method according to claim 13, further including:
(s) prior to conducting steps (i) and (m), acquiring a combined bow section end-connected to stern section, longitudinal midbodiless vessel (280) and providing said vessel on said body of water adjacent said first-described and second floating drydock sections;
(t) depressing said first-described and second floating drydock sections (270 and 276), floating said vessel (280) thereover and elevating said first-described and second floating drydock sections (270 and 276) so that a joint (286) between said bow and stern sections is effectively located between said first-described and second floating drydock sections, and said vessel (280) is cooperatively supported by said first-described and second floating drydock sections (270 and 276); and
(u) disconnecting said bow and stern sections (284 and 282) from one another at said joint (286).

15. A method according to claim 14, further comprising:
(v) subsequent to conducting step (u) and prior to conducting steps (i) and (m), depressing said first-described and said second floating drydock sections (270 and 276), and floating said bow sections (284 and 282) respectively therefrom onto said body of water.

16. A bow-ended tanker midbody component (294) produced by the process of claim 12.

17. A stern-ended tanker midbody component (290) produced by the process of claim 12.

18. An upright vessel hull module (260) produced by the process of any of claims 1 to 7.

19. A tanker longitudinal midbody component (288 or 292) produced by the process of any of claims 9 to 12.

20. A double-hulled tanker (296) produced by the process of claim 13, 14, or 15.

## Patentansprüche

1. Verfahren zum Aufrichten eines Gegenstandes von einer liegenden in eine aufrechte Lage, wobei das Verfahren das Anordnen des Gegenstandes auf einer Halterung, die für eine Schwenkbewegung um eine im wesentlichen horizontale Achse zwischen einer im wesentlichen horizontalen ersten Position und einer im wesentlichen vertikalen zweiten Position ausgestaltet ist, und das Auspumpen von Wasser aus Ballasttanks der schwimmenden Halterung umfaßt, um so zu bewirken, daß der liegende Gegenstand (260) auf der Halterung zusammen mit der Halterung um die Achse geschwenkt wird, bis die Halterung die zweite im wesentlichen vertikalen Position eingenommen hat und der Gegenstand aufrecht steht;
**dadurch gekennzeichnet**, daß der Gegenstand ein Schiffsrumpfmodul (260) für einen doppelwandigen Tankermittelkörper ist, wobei das Modul innere und äußere Wände, die durch längliche Platten miteinander verbunden sind, so daß doppelwandige linke, rechte und untere Wände (232, 232 und 230) gebildet werden, die jeweils eine zugehörige Anzahl von sich in Längsrichtung erstreckenden Zellen (160) haben, ein Deck (234), das sich zwischen der linken und der rechten Wand (232) erstreckt, und eine querverlaufende Schottwand (226) aufweist, durch die zugehörigen ersten Enden der Zellen und ein zugehöriges erstes Ende des innerhalb des Umfangs der linken, rechten und unteren Wand sowie des Decks gebildeten Raumes verschlossen wird, wobei die gegenüberliegenden Enden des Raumes offen sind;
wobei das Verfahren umfaßt:
(a) Vorsehen eines schimmenden Trockendocks (272) mit zumindest einem Abschnitt (270), der aus der Wassermasse angehoben und darin abgesenkt werden kann, indem die Balasttanks ausgepumpt und geflutet werden;
(b) Vorsehen einer Schwenkanordnung (274) auf dem schwimmenden Trockendock (270), die die Halterung und Schwenkzapfen umfaßt, durch die die Halterung für eine Schwenkbewegung um die im wesentlichen horizontale Achse zwischen der im wesentlichen horizontalen ersten Position und der im wesentlichen vertikalen zweiten Position gelagert ist;
(c) Anordnen des schwimmenden Trockendocks (270) in der Wassermasse in einem schwimmenden Zustand und Anordnen des Moduls (260) in der gleichen Wassermasse benachbart zu dem Trockendock in einer liegenden Stellung, wobei es mit seinem geschlossenen Ende nach unten schwimmt;
(d) Absenken des Trockendock-Abschnitts (270) durch Fluten von dessen Ballasttanks und Aufschwimmenlassen des liegenden Moduls auf die Halterung, wobei sich die Halterung in ihrer im wesentlichen horizontalen ersten Position befindet, so daß das liegende Modul (260) auf der Halterung getragen wird, wobei sich die untere Wand (230) und das Deck (234) des liegenden Moduls an gegenüberliegenden Seiten einer imaginären vertikalen Ebene befinden, in der die Achse der Schwenkanordnung (274) liegt;
(e) Einfüllen eines fluiden Mediums, das schwerer als Luft ist, in zumindest einige der Zellen (160) und Auspumpen von Wasser aus den Ballasttanks des Trockendock-Abschnitts (270), um so den Trockendock-Abschnitt (270) allmählich anzuheben und um dadurch zu bewirken, daß das liegende Modul (260) auf der Halterung zusammen mit der Halterung um die Achse geschwenkt wird, bis die Halterung die im wesentlichen vertikale zweite Position erreicht hat und das Modul (260) aufrecht steht und an einer Haltefläche anliegt, die benachbart zu der Halterung der Schwenkanordnung (274) angeordnet ist.

2. Verfahren nach Anspruch 1, wobei Schritt (e) das Einfüllen eines fluiden Mediums, das schwerer als Luft ist, in zumindest einige der Zellen (160) der unteren Wand (230) umfaßt.

3. Verfahren nach Anspruch 1 oder 2, wobei das fluide Medium, das schwerer als Luft ist, Wasser ist.

4. Verfahren nach Anspruch 1 oder 2, wobei die Wassermasse eine Frischwassermasse und das fluide Medium, das schwerer als Luft ist, Seewasser ist.

5. Verfahren nach einem der vorhergehenden Ansprüche, wobei die Haltefläche auf dem schwimmenden Trockendock-Abschnitt (270) angeordnet ist.

6. Verfahren nach einem der vorhergehenden Ansprüche, wobei Schritt (c) das Zusammenbauen des Moduls (260) auf dem schwimmenden Trockendock-Abschnitt (270) aus einer Anzahl von Rumpf- und Deckabschnitten (182) und querverlaufenden Schottwänden (226) umfaßt, während der schwimmende Trockendock-Abschnitt (270) aus der Wassermasse angehoben ist.

7. Verfahren nach Anspruch 6, das außerdem als ein Teil von Schritt (c) umfaßt:
Absenken des angehobenen schwimmenden Trockendock-Abschnitts (270) und dadurch Aufschwimmenlassen des sich darauf befindlichen, liegenden Modules (260) in der Wassermasse; und
Einbauen von weiteren Strukturbauteilen in das liegende Modul (260), während das liegende Modul in der Wassermasse aufschwimmt.

8. Verfahren nach Anspruch 7, das umfaßt, während das liegende Modul (260) in der Wassermasse schwimmt, das ähnliche aufeinanderfolgende Zusammenbauen einer Anzahl von gleichen Modulen (260) auf dem schwimmenden Trockendock-Abschnitt (270) und Aufschwimmenlassen von jedem Modul in der Wassermasse als ein jeweils liegendes Modul.

9. Verfahren zur Herstellung eines Hauptbauteils für einen doppelwandigen Tanker, mit:
Aufrichten eines Schiffsrumpfmoduls (260) für einen doppelwandigen Tankermittelkörper aus einer liegenden in eine aufrechte Lage durch ein Verfahren nach Anspruch 8, wobei für jedes der Module (260) nacheinander die Schritte (d) und (e) durchgeführt werden;
(f) Verschieben jedes aufrechten Moduls (260), das zuletzt Gegenstand von Schritt (e) war, über die Haltefläche entlang seiner eigenen Längsachse weg von der Schwenkanordnung (274), bevor jeweils nachfolgend Schritt (e) durchgeführt wird; und
(g) serielles Verbinden von allen aufrechten Modulen (260) Ende-an-Ende miteinander, wodurch ein länggerichtetes Tankermittelkörperbauteil (288 oder 292) geschaffen wird.

10. Verfahren nach Anspruch 9, das außerdem umfaßt:
(h) Vorsehen eines zweiten schwimmenden Trockendock-Abschnitts (276) benachbart zu dem zuerst beschriebenen schwimmenden Trockendock-Abschnitt (270); und
wenn Schritt (f) durchgeführt ist, Verschieben des jeweiligen aufrechten Moduls (260), das zuletzt Gegenstand von Schritt (e) war, von der Halterung (274) des zuerst beschriebenen schwimmenden Trockendock-Abschnitts (270) auf den zweiten schwimmenden Trockendock-Abschnitt (276); wobei Schritt (g) auf dem zweiten schwimmenden Trockendock-Abschnitt (276) durchgeführt wird.

11. Verfahren nach Anspruch 10, wobei:
in jedem Zeitabschnitt, in dem Schritt (g) durchgeführt wird, bei dem ein jeweils gerade zusammengebautes aufrechtes Modul (260) Ende-an-Ende mit einem jeweils zuvor zusammengebauten aufrechten Modul (260) verbunden wird, das gerade zusammengebaute aufrechte Modul auf dem zuerst beschriebenen schwimmenden Trockendock-Abschnitt (270) getragen ist und das jeweils zuvor zusammengebaute aufrechte Modul auf dem zweiten schwimmenden Trockendock-Abschnitt (276) getragen ist, und wobei die jeweiligen miteinander zu verbindenden Modulenden wirksam zwischen dem zuerst beschriebenen und dem zweiten schwimmenden Trockendock-Abschnitt angeordnet sind; und wobei als Teil von jedem dieser Zeitabschnitte, das zuerst beschriebene und das zweite schwimmende Trockendock-Modul bezüglich ihrer Position auf der Wassermasse relativ zueinander verlagert werden, um die jeweils miteinander zu verbindenden Modulenden auszurichten.

12. Verfahren nach Anspruch 11, das außerdem umfaßt:
(i) nach Durchführung von Schritt (h): Vorsehen auf der Haltefläche des zuerst beschriebenen schwimmenden Trockendock-Abschnitts (270) entweder eines Tankerbugabschnitts (284) oder eines Tankerheckabschnitts (282) mit einem Ende, das wirksam zwischen dem zuerst beschriebenen und dem zweiten schwimmenden Trockendock-Abschnitt (270 und 276) in Berührung mit einem Ende eines längsgerichteten Tankermittelkörperbauteils (288 oder 292) angeordnet ist;
(j) Verbinden des Endes des längsgerichteten Tankermittelkörpers (288 oder 292) mit dem Ende entweder des Tankerbugabschnitts (284) oder des Tankerheckabschnitts (282), um dadurch ein jeweils durch ein Bug und ein Heck abgeschlossenes Tankermittelkörperbauteil (290 oder 294) zu schaffen; und
(k) Absenken des zuerst beschriebenen und des zweiten schwimmenden Trockendock-Abschnitte und Aufschwimmenlassen des je durch ein Bug und ein Heck abgeschlossenen Tankermittelkörperbauteils (290 oder 294) auf der Wassermasse.

13. Verfahren zur Herstellung eines doppelwandigen Tankers, mit:
Herstellen eines ersten längsgerichteten Tankermittelkörperbauteils (292) durch ein Verfahren nach Anspruch 11;
(i) nach Durchführung von Schritt (h): Vorsehen auf der Halterung des zuerst beschriebenen schwimmenden Trockendock-Abschnitts eines Tankerbugabschnitts (284) mit einem Ende, das wirksam zwischen dem zuerst beschriebenen und dem zweiten schwimmenden Trockendock-Abschnitt in Berührung mit einem Ende eines längsgerichteten Tankermittelkörperbauteils angeordnet ist;
(j) Verbinden des Endes des längegerichteten Tankermittelkörpers mit dem Ende des Tankerbugabschnitts, um dadurch ein durch ein Bug abgeschlossenes Tankermittelkörperbauteil (294) zu schaffen; und
(k) Absenken des zuerst beschriebenen und des zweiten schwimmenden Trockendock-Abschnitts und Aufschwimmenlassen des durch ein Bug abgeschlossenen Tankermittelkörperbauteils auf der Wassermasse;
(l) Wiederholen der Folge der Schritte (a) - (h), um ein zweites Tankermittelkörperbauteil (288) zu schaffen;
(m) nach Durchfuhrung von Schritt (l): Vorsehen auf der Halterung des zuerst beschriebenen schwimmenden Trockendock-Abschnitts einen Tankerheckabachnitt (282) mit einem Ende, das wirksam zwischen dem zuerst beschriebenen und dein zweiten schwimmenden Trockendock-Abschnitt in Berührung mit einem Ende des zweiten längsgerichteten Tankermittelkörperbauteiis angeordnet ist;
(n) Verbinden des Endes des zweiten längegerichteten Tankermittelkörpers mit dem Ende des Tankerheckabschnitts, um dadurch ein durch ein Heck abgeschlossenes Tankermittelkörperbauteil zu schaffen;
(o) Absenken des zuerst beschriebenen und des zweiten schwimmenden Trockendock-Abschnitts und Aufschwimmenlassen des durch ein Heck abgeschlossenen Tankermittelkörperbauteils auf der Wassermasse;
(p) Handhaben des mit einem Bug und einem Heck abgeschlossenen Tankermittelkörperbauteils (294 und 290) sowie des zuerst beschriebenen und des zweiten schwimmenden Trockendock-Abschnitts (270 und 276), so daß eines der Bauteile von dem zuerst beschriebenen schwimmenden Trockendock-Abschnitt getragen und das andere Bauteile von dem zweiten schwimmenden Trockendock-Abschnitt getragen wird, wobei die jeweils freien Enden sich berührend wirksam zwischen dem zuerst beschriebenen und dem zweiten schwimmenden Trockendock-Abschnitt angeordnet sind und wobei sich die längsgerichteten Bauteile in Ausrichtung befinden;
(q) Verbinden der freien Enden, um einen doppelwandigen Tanker (296) zu schaffen; und
(r) Absenken des zuerst beschriebenen und des zweiten schwimmenden Trockendock-Abschnitts (270 und 276) und Aufschwimmenlassen des doppelwandigen Tankers (296) auf der Wassermasse.

14. Verfahren nach Anspruch 13, das außerdem umfaßt:
(s) vor der Durchführung der Schritte (i) und (m): Erwerben eines längsgerichteten mittelkörperlosen Rumpfes (280) aus einem Bugabschnitt und einem an dessen Ende angebrachten Heckabschnitt und Vorsehen des Rumpfes auf der Wassermasse benachbart zu dem zuerst beschriebenen und dem zweiten schwimmenden Trockendockabschnitt;
(t) Absenken des zuerst beschriebenen und des zweiten schwimmenden Trockendock-Abschnitts (270 und 276), Aufschwimmenlassen des Rumpfes (280) darüber und Anheben des zuerst beschriebenen und des zweiten schwimmenden Trockendock-Abschnitts (270 und 276), so daß eine Verbindung (286) zwischen dem Bug- und dem Heckabschnitt sich wirksam zwischen dem zuerst beschriebenen und dem zweiten schwimmenden Trockendock-Abschnitt befindet, wobei der Rumpf (280) zusammenwirkend von dem zuerst beschriebenen und dem zweiten schwimmenden Trockendock-Abschnitt (270 und 276) getragen wird; und
(u) Trennen des Bug- und des Heckabschnitts (284 und 282) voneinander an dieser Verbindung (286).

15. Verfahren nach Anspruch 14, das außerdem umfaßt:
(v) nach der Durchführung von Schritt (u) und vor der Durchführung der Schritte (i) und (m): Absenken des zuerst beschriebenen und des zweiten schwimmenden Trockendock-Abschnitts (270 und 276) und Aufschwimmenlassen der jeweiligen Bugabschnitte (284 und 282) auf der Wassermasse.

16. Durch einen Bug abgeschlossenes Tankermittelkörperbauteil (294), das nach dem Verfahren nach Anspruch 12 hergestellt ist.

17. Durch ein Heck abgeschlossenes Tankermittelkörperbauteil (290), das nach dem Verfahren nach Anspruch 12 hergestellt ist.

18. Aufrechtes Schiffsrumpfmodul (260), das nach dem Verfahren nach einem der Ansprüche 1 bis 7 hergestellt ist.

19. Längegerichtetes Tankermittelkörperbauteil (288 oder 292), das nach dem Verfahren nach einem der Ansprüche 9 bis 12 hergestellt ist.

20. Doppelwandiger Tanker (296), der nach dem Verfahren nach Anspruch 13, 14 oder 15 hergestellt ist.

## Revendications

1. Procédé pour redresser un objet d'une orientation dressée debout à une orientation verticale, le procédé comprenant la disposition de l'objet sur un support qui est monté de manière à pouvoir effectuer un mouvement de pivotement autour d'un axe sensiblement horizontal entre une première position sensiblement horizontale et une seconde position sensiblement verticale et pompage d'eau pour l'extraire de caisses à eau de lest du support flottant de manière à faire tourner ledit objet dressé debout (260) sur ledit support autour dudit axe avec ledit support jusqu'à ce que ledit support ait ladite seconde position sensiblement verticale et que ledit objet (260) soit vertical ;
caractérisé en ce que ledit objet est un module (260) de coque de navire destiné à un corps central de navire citerne à cloisons doubles, ledit module comprenant des coques intérieure et extérieure reliées l'une à l'autre par des plaques longitudinales de manière à constituer des cloisons gauche, droite et inférieure de coque double (232, 232 et 230) dont chacune comprend une série respective de cellules longitudinales (160), un pont (234) formant une liaison entre lesdites cloisons gauche et droite (232) et des moyens de cloisons transversales (226) fermant l'une correspondante des extrémités desdites cellules et une extrémité correspondante de l'espace délimité à la périphérie à l'intérieur desdites cloisons gauche, droite et inférieure et dudit pont, les extrémités opposées dudit espace étant ouvertes ;
ledit procédé comprenant :
(a) la mise en oeuvre d'une cale sèche flottante (272) comprenant au moins une partie (270) qui est capable d'être relevée et enfoncée dans un corps d'eau par vidage par pompage et par immersion desdites caisses à eau de lest ;
(b) la disposition sur ladite cale sèche flottante (270) d'un ensemble à tourillons (274) qui comprend ledit support et des tourillons de montage du support de manière qu'il puisse effectuer un mouvement de pivotement autour dudit axe sensiblement horizontal entre ladite première position sensiblement horizontale et ladite seconde position sensiblement verticale ;
(c) la disposition de ladite cale sèche flottante (270) dans un corps d'eau dans une condition de flottement et la disposition, dans le même corps d'eau, à côté de ladite cale sèche, dudit module (260) à un état dressé debout de manière qu'il flotte en ayant son extrémité fermée tournée vers le bas ;
(d) enfoncement de ladite partie (270) de cale sèche par immersion de ses caisses à eau de lest et mise à flot dudit module dressé debout sur ledit support alors que ledit support est à ladite première position sensiblement horizontale, de manière que ledit module dressé debout (260) soit supporté sur ledit support en ayant ladite cloison inférieure (230) et ledit pont (234) dudit module dressé debout qui sont disposés sur les côtés opposés d'un plan vertical imaginaire passant par ledit axe dudit ensemble à tourillons (274) ;
(e) déversement d'un milieu fluide plus lourd que l'air dans au moins certaines desdites cellules (160) pour les emplir et pompage de l'eau pour l'extraire desdites caisses à eau de lest de ladite partie de cale sèche (270) de manière à élever progressivement ladite partie de cale sèche (270) et ainsi à faire tourner ledit module (260) dressé debout sur ledit support autour dudit axe avec ledit support jusqu'à ce que ledit support ait ladite seconde position sensiblement verticale et que ledit module (260) soit vertical et repose sur une surface de support qui est placée au voisinage dudit support dudit ensemble à tourillons (274).

2. Procédé selon la revendication 1, suivant lequel l'étape (e) comprend le déversement d'un milieu fluide plus lourd que l'air dans au moins certains desdites cellules (160) de ladite cloison inférieure (230) pour les emplir.

3. Procédé selon la revendication 1 ou 2, suivant lequel ledit milieu fluide plus lourd que l'air est de l'eau.

4. Procédé selon la revendication 1 ou 2, suivant lequel ledit corps d'eau est un corps d'eau douce et ledit milieu fluide plus lourd que l'air est de l'eau de mer.

5. Procédé selon l'une quelconque des revendications précédentes, suivant lequel ladite surface de support est placée sur ladite partie (270) de cale sèche flottante.

6. Procédé selon l'une quelconque des revendications précédentes, suivant lequel l'étape (c) comprend l'assemblage dudit module (260) sur ladite partie (270) de cale sèche à l'aide de plusieurs sous-ensembles (182) de coque et de pont ainsi que d'éléments transversaux de cloisons (226) pendant que ladite partie (270) de cale sèche flottante est élevée dans ledit corps d'eau.

7. Procédé selon la revendication 6, comprenant par ailleurs :
comme partie de l'étape (c),
l'enfoncement de ladite partie (270) de cale sèche flottante élevée et la mise à flot, à l'écart de celle-ci, dudit module dressé debout (260) dans ledit corps d'eau ; et
l'installation d'éléments structurels supplémentaires dans ledit module dressé debout (260) pendant que ledit module dressé debout est flottant dans ledit corps d'eau.

8. Procédé selon la revendication 7, comprenant, pendant que ledit module dressé debout (260) est flottant dans ledit corps d'eau, l'assemblage successif identique de plusieurs modules identiques (260) sur ladite partie (270) de cale sèche flottante et la mise à flot de chacun d'eux à distance de celle-ci dans ledit corps d'eau sous forme d'un module respectif dressé debout.

9. Procédé de fabrication d'un composant principal d'un navire citerne à coque double, comprenant :
le redressement d'un module de coque de navire (260), destiné à un corps central de navire-citerne à cloison double, d'une orientation dressée debout à une orientation verticale, par un procédé selon la revendication 8, étapes (d) et (e) qui sont exécutées successivement pour chacun desdits modules (260) ;
(f) le déplacement, le long de ladite surface de support, de chaque module vertical (260) qui vient d'être soumis à l'étape (e) le long de son propre axe longitudinal pour l'éloigner dudit ensemble à tourillons (274) avant l'exécution successive respective pour chacun d'eux de l'étape (e) ; et
(g) l'assemblage en série de tous lesdits modules verticaux (260) les uns aux autres bout à bout, de manière à réaliser un composant de corps central longitudinal (288 ou 292) d'un navire-citerne.

10. Procédé selon la revendication 9, comprenant par ailleurs :
(h) la mise en oeuvre d'une seconde partie (276) de ladite cale sèche flottante qui est voisine de la première partie décrite (270) de ladite cale sèche flottante ; et
lorsque l'étape (f) est exécutée, le déplacement du module vertical respectif (260) qui vient d'être soumis à l'étape (e) pour l'éloigner dudit support (274) situé sur ladite première partie décrite (270) de cale sèche flottante et pour le mettre sur ladite seconde partie (276) de cale sèche flottante ; l'étape (g) étant exécutée sur ladite seconde partie (276) de cale sèche flottante.

11. Procédé selon la revendication 10, suivant lequel :
pendant l'exécution de l'étape (g), à chaque fois que l'un desdits modules verticaux (260) qui vient d'être respectivement assemblé est relié bout à bout à l'un desdits modules verticaux (260) qui a été respectivement assemblé préalablement, ledit module vertical respectif qui vient d'être assemblé est supporté sur ladite première partie décrite (270) de cale sèche flottante et ledit module respectif vertical préalablement assemblé est supporté sur ladite seconde partie (276) de cale sèche flottante et les extrémités respectives des modules devant être reliées l'une à l'autre sont disposées en réalité entre lesdits premier décrit et second modules de cale sèche flottante ; et, en tant que partie dudit chaque cas, les positions desdits premier décrit et second modules de cale sèche flottante sont réglées l'une par rapport à l'autre sur ledit corps d'eau afin de mettre à l'alignement lesdites extrémités respectives des modules devant être assemblés.

12. Procédé selon la revendication 11, comprenant par ailleurs :
(i) après que l'étape (h) a été achevée, la mise en place sur ladite surface de support, que comporte ladite première partie décrite (270) de cale sèche flottante, de l'une d'une partie avant (284) d'un navire-citerne et d'une partie arrière (282) d'un navire-citerne, qui a une extrémité disposée en réalité entre ladite première partie décrite et ladite seconde partie (270 et 276) de cale sèche flottante, en juxtaposition avec une extrémité dudit composant (288 ou 292) de corps central longitudinal de navire-citerne ;
(j) l'assemblage de ladite extrémité dudit corps central longitudinal de navire-citerne (288 ou 292) avec ladite extrémité de ladite une de partie avant (284) et de partie arrière (282) de navire-citerne de manière à réaliser un composant respectif (290 ou 294) de corps central d'un navire-citerne comportant une extrémité avant ou une extrémité arrière ; et
(k) enfoncement de ladite première partie décrite et de la seconde partie de cale sèche flottante et la mise à flot à distance d'elles, sur ledit corps d'eau, dudit composant respectif (290 ou 294) de corps central de navire-citerne comportant une extrémité avant ou une extrémité arrière.

13. Procédé de fabrication d'un navire-citerne à coque double, comprenant :
la fabrication d'un premier composant (292) de corps central longitudinal de navire-citerne par un procédé selon la revendication 11,
(i) après que l'étape (h) a été achevée, la mise en place, sur ledit support que comporte la première partie décrite de cale sèche flottante, d'une partie avant (284) de navire-citerne ayant une extrémité disposée en réalité entre ladite première partie décrite et ladite seconde partie de cale sèche flottante en juxtaposition avec une extrémité dudit composant de corps central longitudinal de navire-citerne ;
(j) l'assemblage de ladite extrémité dudit corps central longitudinal de navire-citerne avec ladite extrémité de ladite partie avant de navire-citerne de manière à réaliser un composant (294) de corps central de navire-citerne comportant une extrémité avant ; et
(k) l'enfoncement de ladite première partie décrite et ladite seconde partie de cale sèche flottante et la mise à flot, à distance de celles-ci, dudit composant de corps central de navire-citerne comportant une extrémité avant sur ledit corps d'eau ;
(l) répétition de la série des étapes (a) - (h) pour réaliser un second composant (288) de corps central longitudinal de navire-citerne ;
(m) après que l'étape (l) a été achevée, la mise en place, sur ledit support que comporte ladite première partie décrite de cale sèche flottante, d'une partie arrière (282) de navire-citerne ayant une extrémité disposée en réalité entre ladite première partie décrite et ladite seconde partie de cale sèche flottante en juxtaposition avec une extrémité dudit second composant de corps central longitudinal de navire-citerne ;
(n) l'assemblage de ladite extrémité dudit second corps central longitudinal de navire-citerne avec ladite extrémité de ladite partie arrière de navire-citerne, de manière à réaliser ainsi un composant respectif de corps central de navire-citerne comportant une extrémité arrière ;
(o) enfoncement de ladite première partie décrite et de la seconde partie de cale sèche flottante et mise à flot, à distance de celles-ci, dudit composant de corps central de navire citerne comportant une extrémité arrière sur ledit corps d'eau ;
(p) manoeuvre desdits composants (294 et 290) de corps central d'un navire-citerne comportant une extrémité avant et comportant une extrémité arrière et de ladite première partie décrite et de la seconde partie (270 et 276) de cale sèche flottante, de manière que l'un desdits composants soit supporté par ladite première partie décrite de cale sèche flottante et que l'autre desdits composants soit supporté par ladite seconde partie de cale sèche flottante, les extrémités libres respectives de chacun étant juxtaposées en réalité entre ladite première partie décrite et la seconde partie de cale sèche flottante et lesdits composants étant à l'alignement longitudinal ;
(q) assemblage desdites extrémités libres l'une à l'autre pour réaliser un navire-citerne (296) à coque double ; et
(r) enfoncement de ladite première partie décrite et de la seconde parties (270 et 276) de cale sèche flottante et mise à flot à distance de celles-ci dudit navire-citerne à coque double (296) sur ledit corps d'eau.

14. Procédé selon la revendication 13, comprenant par ailleurs :
(s) avant l'exécution des étapes (i) et (m), l'acquisition d'un bâtiment combiné (280) formé d'une partie avant dont l'extrémité est reliée à une partie arrière et qui ne comporte aucun corps central longitudinal et la mise en place dudit bâtiment sur ledit corps d'eau à côté de ladite première partie décrite et de la seconde partie de cale sèche flottante ;
(t) enfoncement de ladite première partie décrite et de la seconde partie de cale sèche flottante (270 et 276), mise à flot dudit bâtiment (280) au-dessus de celles-ci et élévation de ladite première partie décrite et de la seconde partie de cale sèche flottante (270 et 276), de manière qu'un joint (286) situé entre lesdites parties avant et arrière, soit placé en réalité entre ladite première partie décrite et la seconde partie de cale sèche flottante et que ledit bâtiment (280) soit supporté en coopération par ladite première première décrite et la seconde partie de cale sèche flottante (270 et 276) ; et
(u) désassemblage desdites parties avant et arrière (284 et 292) l'une de l'autre à l'emplacement dudit joint (286).

15. Procédé selon la revendication 14, comprenant par ailleurs :
(v) après avoir exécuté l'étape (u) et avant d'exécuter les étapes (i) et (m), enfoncement de ladite première partie décrite et la seconde partie de cale sèche flottante (270 et 276) et mise à flot à l'écart de celles-ci desdites parties avant (284 et 282), respectivement, sur ledit corps d'eau.

16. Composant de corps central d'un navire-citerne comportant une extrémité avant (294) et produit par le procédé selon la revendication 12.

17. Composant de corps central d'un navire-citerne comportant une extrémité arrière (290) et produit par le procédé selon la revendication 12.

18. Module vertical de coque de navire (260) produit par le procédé selon l'une quelconque des revendications 1 à 7.

19. Composant de corps central longitudinal d'un navire-citerne (288 ou 292) produit par le procédé selon l'une quelconque des revendications 9 à 12.

20. Navire-citerne à coque double (296) produit par le procédé de la revendication 13, 14 ou 15.
